(19) Europäisches Patentamt
European Patent Office
Office européen des brevets

(11) **EP 4 697 219 A1**

(12) **EUROPEAN PATENT APPLICATION**
published in accordance with Art. 153(4) EPC

(43) Date of publication:
**18.02.2026 Bulletin 2026/08**

(21) Application number: **24807206.8**

(22) Date of filing: **14.05.2024**

(51) International Patent Classification (IPC):
**G06F 21/62** (2013.01) **G06Q 10/06** (2023.01)
**H04K 1/02** (2006.01)

(52) Cooperative Patent Classification (CPC):
**G06F 21/62; G06Q 10/06; H04K 1/02**

(86) International application number:
**PCT/JP2024/017834**

(87) International publication number:
**WO 2024/237254 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **18.05.2023 JP 2023082042**

(71) Applicant: **NTT DOCOMO, INC.**
**Tokyo 100-6150 (JP)**

(72) Inventors:
• **ONODA Kasumi**
**Tokyo 100-6150 (JP)**
• **TERADA Masayuki**
**Tokyo 100-6150 (JP)**
• **OCHIAI Keiichi**
**Tokyo 100-6150 (JP)**
• **NAKAGAWA Tomohiro**
**Tokyo 100-6150 (JP)**
• **HASEGAWA Keita**
**Tokyo 100-6150 (JP)**
• **NOZAWA Kazuma**
**Tokyo 100-6150 (JP)**

(74) Representative: **Viering, Jentschura & Partner mbB**
**Patent- und Rechtsanwälte**
**Am Brauhaus 8**
**01099 Dresden (DE)**

(54) **INFORMATION PROCESSING DEVICE, INFORMATION PROCESSING SYSTEM, AND INFORMATION PROCESSING METHOD**

(57) An information processing device (10A) includes: a basic aggregation information acquisition unit (14A) that acquires basic aggregation information of devices (10A, 10B), each holding user data including a user ID and attribute information related to a user; an estimation unit (15) that estimates sample size of an aggregation result based on the basic aggregation information and a basic value for estimating the sample size of the aggregation result; an evaluation unit (16) that evaluates influence of noise for each combination included in an aggregation pattern containing multiple combinations of data items included in the attribute information, based on the sample size; and an allocation determination unit (17) that determines an allocation of a privacy budget for noise for each combination for aggregation targeting the aggregation pattern, within a predetermined range of the privacy budget, based on evaluation results for each combination.

Fig.1

**Description**

**Technical Field**

The present disclosure relates to an information processing device, an information system, and an information processing method.

**Background Art**

By utilizing data held by multiple companies, it is expected to create value that cannot be obtained from data held by a single company. As one method for data utilization among multiple companies, there is a method in which data held by multiple companies are aggregated to output aggregation results without mutual disclosure of the data. In this case, by adding noise based on the differential privacy standard to the aggregation results, it is possible to protect privacy information of the output data. However, in statistical data utilization among multiple companies, unlike data utilization by a single company, the degree of influence of noise on the aggregation results is unknown. Therefore, when performing multiple aggregations on the same dataset, it is difficult to appropriately determine an allocation of a privacy budget for each aggregation. Accordingly, there is a strong demand for appropriately determining the allocation of the privacy budget for each aggregation, taking into account the degree of influence of the noise.

Regarding the allocation of the privacy budget, Non-Patent Literature 1 discloses a technique related to privacy budget allocation in differential privacy use cases involving multiple parties, and presents an example in which the classical model of differential privacy is extended to define a maximization objective function that guarantees optimal privacy budget allocation among multiple parties.

**Citation List**

**Non-Patent Literature**

[Non-Patent Literature 1] "Optimal distribution of privacy budget in differential privacy", Bkakria Anis et al., published on October 16, 2018

**Summary of Invention**

**Problems to be Solved by the Invention**

However, Non-Patent Literature 1 does not disclose a technique for appropriately determining the allocation of the privacy budget for each aggregation, taking into account the degree of influence of noise on the aggregation results.

Therefore, the present disclosure aims to optimize the allocation of the privacy budget when performing multiple aggregations on the same dataset in statistical data utilization among multiple companies.

**Solution to Problem**

An information processing device according to the present disclosure includes: a basic aggregation information acquisition unit that acquires basic aggregation information of both the information processing device itself and a counterpart device, each holding user data including a user ID and attribute information related to a user; an estimation unit that estimates sample size of an aggregation result based on the basic aggregation information of the information processing device itself and the counterpart device acquired by the basic aggregation information acquisition unit, and a basic value used for estimating the sample size of the aggregation result; an evaluation unit that quantitatively evaluates influence of noise for each combination included in an aggregation pattern containing multiple combinations of data items included in the attribute information, based on the sample size of the aggregation result estimated by the estimation unit; and an allocation determination unit that determines an allocation of a privacy budget for noise for each combination for aggregation targeting the aggregation pattern, within a predetermined range of the privacy budget, based on evaluation results for each combination obtained by the evaluation unit.

In such an information processing device, the basic aggregation information acquisition unit acquires basic aggregation information of both the information processing device itself and the counterpart device, the estimation unit estimates sample size of an aggregation result based on the basic aggregation information of the information processing device itself and the counterpart device acquired by the basic aggregation information acquisition unit and a basic value used for estimating the sample size of the aggregation result. The evaluation unit quantitatively evaluates influence of noise for each combination included in an aggregation pattern containing multiple combinations of data items included in the attribute information, based on the sample size of the aggregation result estimated by the estimation unit, and the allocation determination unit determines an allocation of a privacy budget for noise for each combination for aggregation targeting the aggregation pattern, within a predetermined range of the privacy budget, based on evaluation results for each combination obtained by the evaluation unit. In this way, by quantitatively evaluating the influence of noise for each combination included in the aggregation pattern and determining the allocation of the privacy budget for each combination based on the evaluation results, it is possible to optimize the allocation of the privacy budget.

**Advantageous Effects of Invention**

According to the present disclosure, it is possible to optimize the allocation of the privacy budget when performing multiple aggregations on the same dataset in statistical data utilization among multiple companies.

**Brief Description of Drawings**

FIG. 1 is a configuration diagram of an information system according to the first embodiment.
FIG. 2 is a flowchart showing processing executed in the information system according to the first embodiment.
FIG. 3 is a diagram for explaining examples of user data and aggregation patterns.
FIG. 4 is a diagram for explaining the processing of steps S1 to S8 in FIG. 2.
FIG. 5 is a diagram for explaining data processing.
FIG. 6 is a diagram for explaining irreversible conversion of IDs.
FIG. 7 is a diagram for explaining encryption of IDs.
FIG. 8(a) is a diagram for explaining encryption of attribute information, and FIG. 8(b) is a diagram for explaining transmission and reception of encrypted IDs.
FIG. 9 is a diagram for explaining re-encryption of IDs.
FIG. 10 is a diagram for explaining data matching.
FIG. 11 is a diagram for explaining the processing of steps S9 to S12 in FIG. 2.
FIG. 12 is a diagram for explaining the processing of steps S13 to S14 in FIG. 2.
FIG. 13 is a configuration diagram of an information system according to the second embodiment.
FIG. 14 is a flowchart showing processing executed in the information system according to the second embodiment.
FIG. 15 is a diagram for explaining a first example of privacy budget allocation.
FIG. 16 is a diagram for explaining a second example of privacy budget allocation.
FIG. 17 is a diagram for explaining the effects of the present invention.
FIG. 18 is a configuration diagram of an information system according to the third embodiment.
FIG. 19 is a flowchart showing processing executed in the information system according to the third embodiment.
FIG. 20 is a diagram for explaining aggregation method (a).
FIG. 21 is a diagram for explaining aggregation method (b).
FIG. 22 is a diagram for explaining selection of aggregation method.
FIG. 23 is a configuration diagram of an information system according to Modification Example 1.
FIG. 24 is a configuration diagram of an information system according to Modification Example 2.
FIG. 25 is a diagram showing an example of the hardware configuration of the information processing device.

**Description of Embodiments**

Hereinafter, various embodiments of the present disclosure will be described with reference to the drawings. In the following, as a first embodiment, an embodiment in which a preliminary aggregation for calculating a basic value such as data matching rate at the time of aggregation is executed in advance before the main aggregation will be described. As a second embodiment, an embodiment in which known values or estimated values are used as basic values without executing the above preliminary aggregation in advance will be described. As a third embodiment, an embodiment in which an aggregation method suitable for a predetermined purpose (for example, an aggregation method that can minimize the influence of noise) is selected will be described.

(First Embodiment)

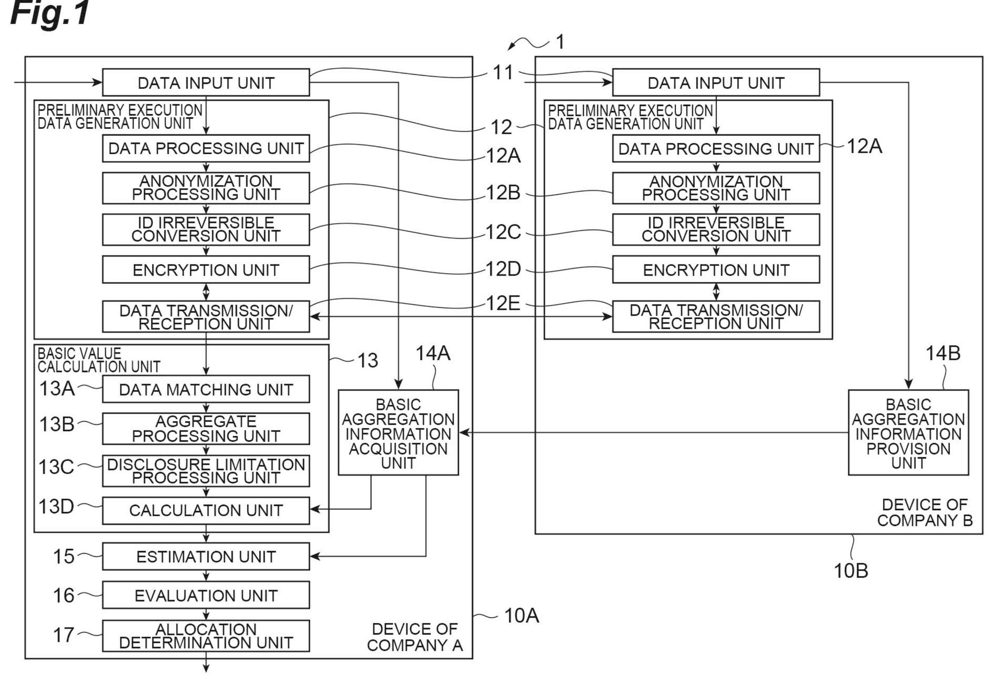

As shown in FIG. 1, an information system 1 in the first embodiment includes a "device of Company A" (hereinafter referred to as a "device 10A") as the first device, and a "device of Company B" (hereinafter referred to as a "device 10B") as the second device (a counterpart device of the first device).

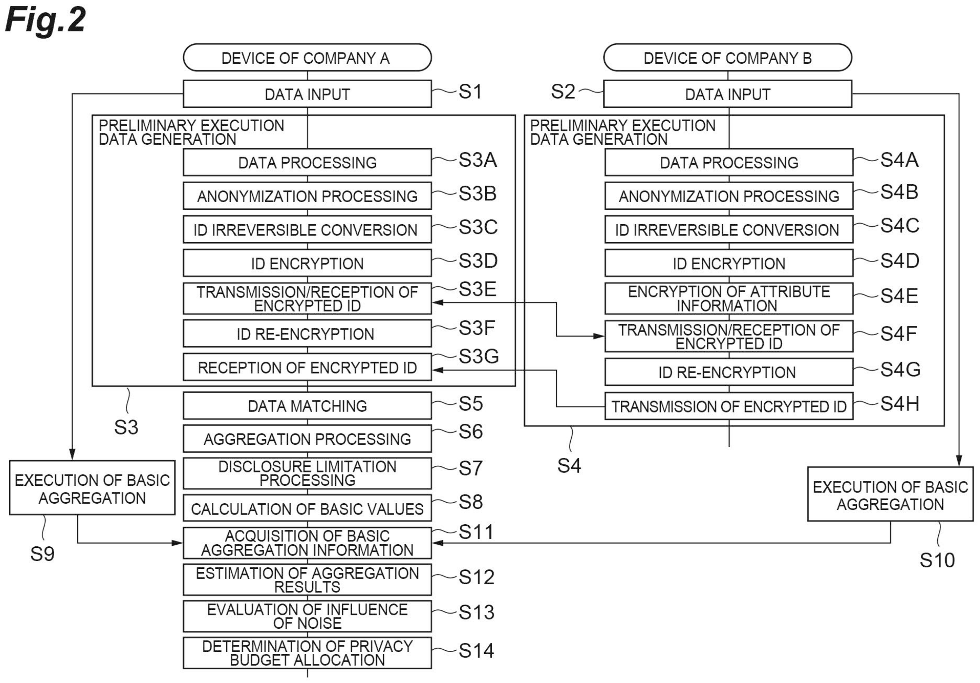

The device 10A includes: a data input unit 11, a preliminary execution data generation unit 12, a basic value calculation unit 13, a basic aggregation information acquisition unit 14A, an estimation unit 15, an evaluation unit 16, and an allocation determination unit 17, while the device 10B includes: a data input unit 11, a preliminary execution data generation unit 12, and a basic aggregation information provision unit 14B. The functions of each unit will be outlined below, and details will be described later along the flowchart in FIG. 2.

The data input unit 11 is a functional unit that receives input data from the outside and is provided in both devices 10A and 10B. However, in both Company A and Company B, the input data is user data including a user ID and attribute information related to a user, but the content of the user data differs for each company. Specific examples of user data will be described later.

The preliminary execution data generation unit 12 is a functional unit that generates data (referred to as "preliminary execution data") for executing a preliminary aggregation in advance before the main aggregation, in order to calculate a basic value such as data matching rate between the two companies, and is provided in both devices 10A and 10B. The preliminary execution data generation unit 12 includes a data processing unit 12A that processes input data into small-scale data for basic value calculation, an anonymization processing unit 12B that performs anonymization processing for privacy protection of attribute information in the user data, an ID irreversible conversion unit 12C that performs irreversible conversion processing on user IDs in the user data, an encryption unit 12D that encrypts the user data, and a data transmission/reception unit 12E that transmits and receives the encrypted user data.

The basic value calculation unit 13 is a functional unit provided in the device 10A that calculates a basic value from preliminary execution data A generated by the preliminary execution data generation unit 12 of the device 10A and preliminary execution data B generated by the preliminary execution data generation unit 12 of the device 10B. The basic value calculation unit 13 includes a data matching unit 13A that matches preliminary execution data A and preliminary execution data B, an aggregate processing unit 13B that performs aggregate processing based on the matching results, a disclosure limitation processing unit 13C that performs disclosure limitation process on the aggregate processing results, and a calculation unit 13D that calculates a basic value from the aggregate processing results after performing the disclosure limitation process.

The basic aggregation information provision unit 14B is a functional unit provided in the device 10B that calculates sample size and item-specific ratio which are basic aggregation information of the user data of the device 10B and provides the device 10A with the calculated sample size and item-specific ratio.

The basic aggregation information acquisition unit 14A is a functional unit provided in the device 10A that calculates sample size and item-specific ratio which are basic aggregation information of the user data of the device 10A itself, and receives the sample size and item-specific ratio which are basic aggregation information of the user data of the device 10B calculated by the counterpart device (the device 10B), thereby acquiring the basic aggregation information of the devices 10A and 10B.

The estimation unit 15 is a functional unit provided in the device 10A that estimates sample size of an aggregation result based on the basic aggregation information of the devices 10A and 10B acquired by the basic aggregation information acquisition unit 14A, and a basic value calculated by the basic value calculation unit 13.

The evaluation unit 16 is a functional unit provided in the device 10A that quantitatively evaluates influence of noise for each combination included in the aggregation pattern, based on the estimated sample size of the aggregation result.

The allocation determination unit 17 is a functional unit provided in the device 10A that determines an allocation of a privacy budget for each combination based on the evaluation results for each combination obtained by the evaluation unit 16.

Next, the details of the processing executed in the information system 1 will be described with reference to FIGS. 2 to 12.

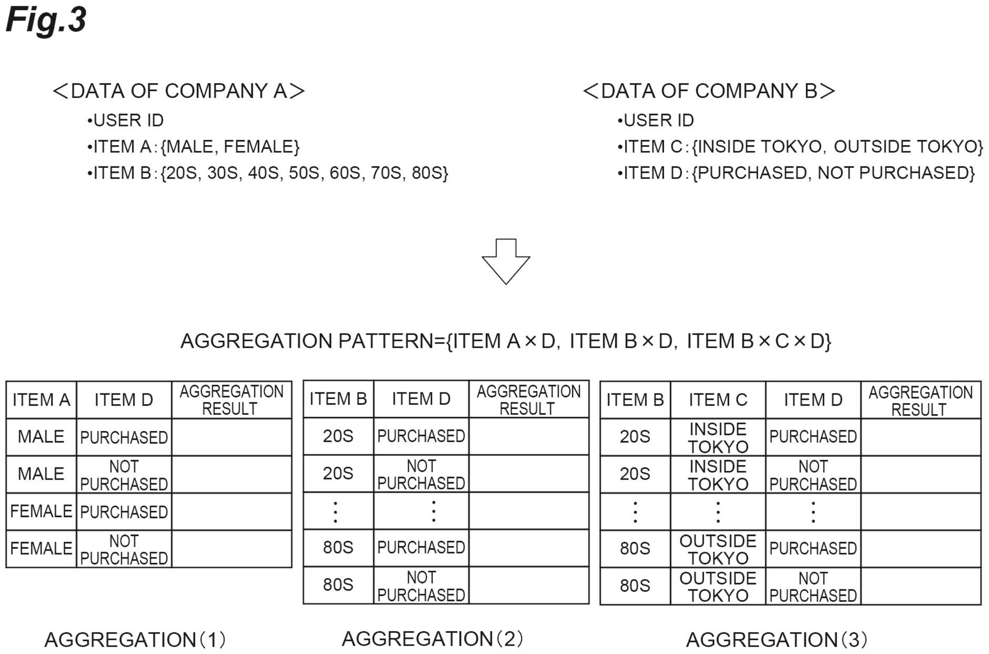

First, in both devices 10A and 10B, the user data to be aggregated is input to the data input unit 11 (steps S1 and S2 in FIG. 2). As shown in FIG. 3, the input data for Company A includes a user ID, item A indicating gender as attribute information, and item B indicating age group as attribute information, while the input data for Company B includes a user ID, item C indicating address (whether inside or outside Tokyo) as attribute information, and item D indicating purchase history (whether a certain product was purchased or not) as attribute information. The aggregation patterns in this embodiment are assumed to be three types: aggregation for the combination of items A and D ("item A × D"), aggregation for the combination of items B and D ("item B × D"), and aggregation for the combination of items B, C, and D ("item B × C × D").

Next, in both devices 10A and 10B, the preliminary execution data generation unit 12 generates the aforementioned preliminary execution data (steps S3 and S4 in FIG. 2). As shown in FIG. 2, the preliminary execution data generation processing includes multiple processing steps, which are divided into data processing into small-scale data for basic value calculation (steps S3A and S4A) and preprocessing (steps S3B to S3G, S4B to S4H) for performing data matching under confidentiality (step S5).

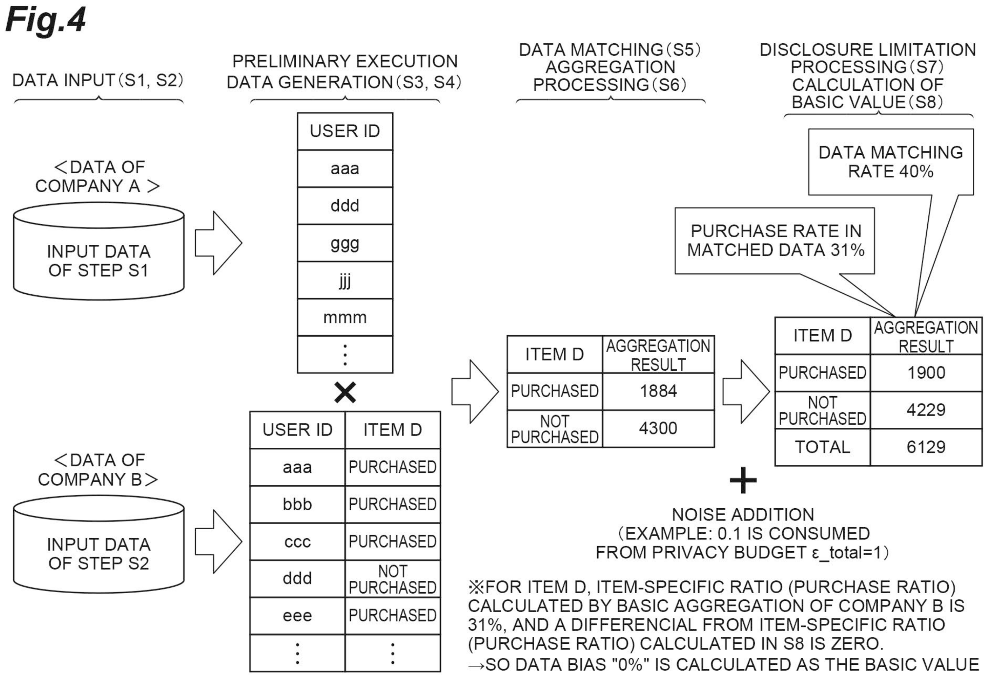

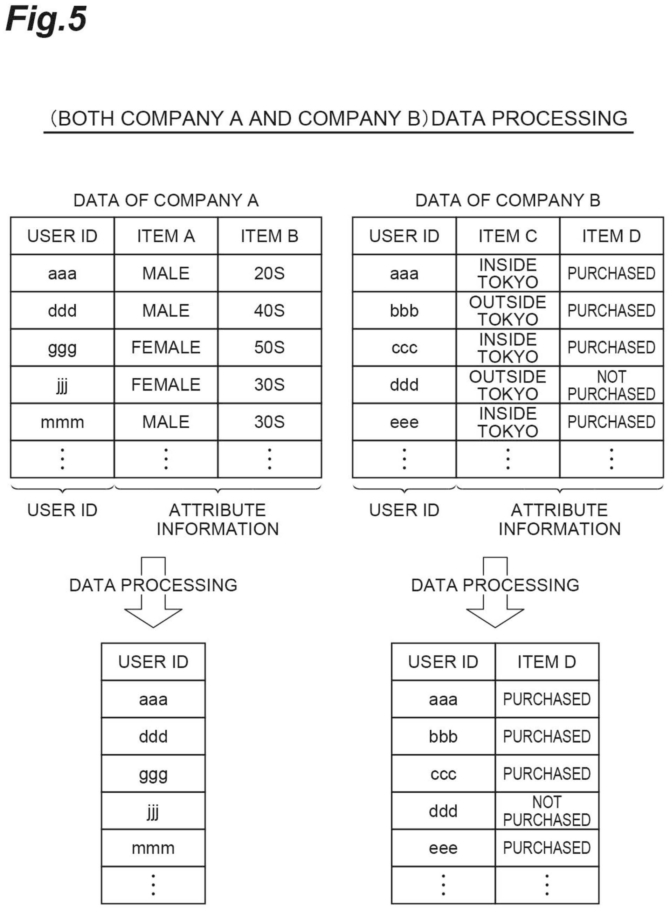

For the former, in both devices 10A and 10B, the data processing unit 12A processes the input data into small-scale data for basic value calculation (steps S3A and S4A). For example, in this embodiment, the "item D" common to the three aggregation patterns (item A × D, item B × D, item B × C × D) is regarded as the main item, and the data is processed to focus only on the item D as attribute information. As a result, as shown in FIGS. 4 and 5, the data for Company A is processed to include only the user ID, and the data for Company B is processed to include the user ID and item D.

The latter preprocessing includes anonymization processing, irreversible conversion of IDs, and encryption of IDs. In anonymization processing, in both devices 10A and 10B, the anonymization processing unit 12B performs anonymization processing for privacy protection of attribute information in user data (steps S3B and S4B in FIG. 2). For example, k-anonymization is performed so that there are at least k user data records with the same attribute information in the target user data, reducing the probability of identifying an individual to 1/k or less. If there are fewer than k user data records with the same attribute information in the attribute information of Company B's user data, the attribute information of user data with similar attribute information is converted so that there are at least k records.

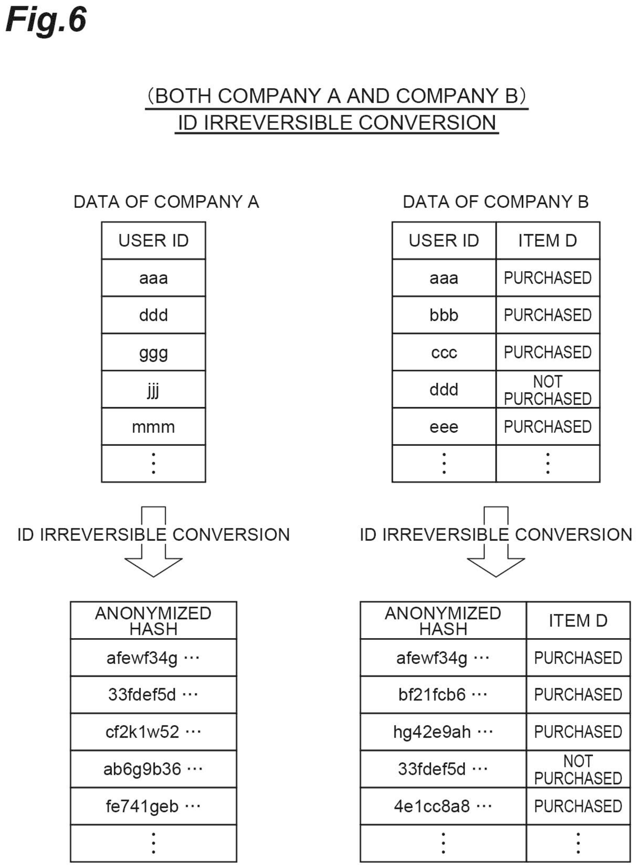

Next, as shown in FIG. 6, in both devices 10A and 10B, the ID irreversible conversion unit 12C performs irreversible conversion processing on user IDs in user data (steps S3C and S4C). Specifically, the ID irreversible conversion unit 12C performs hashing on the user ID and then discards the salt used in the hashing process.

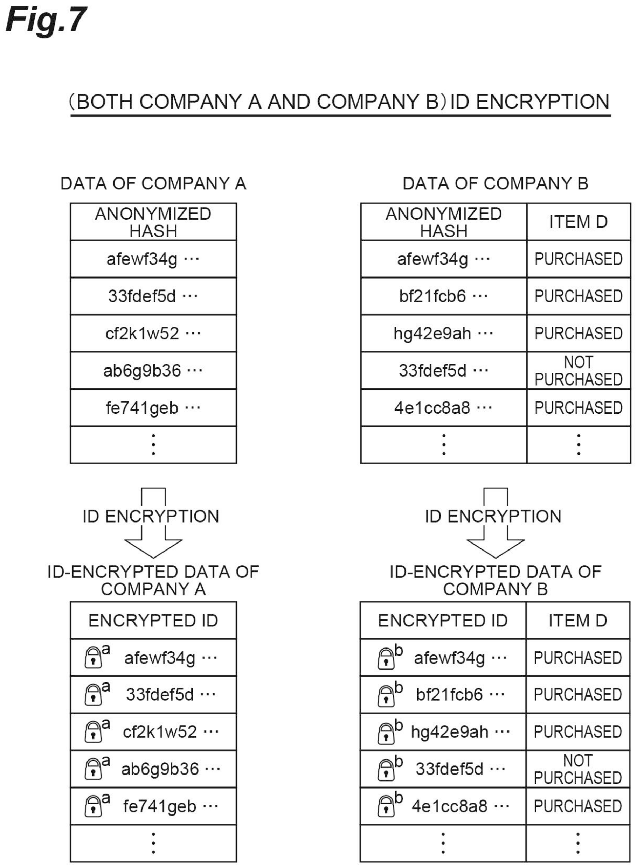

Next, as shown in FIG. 7, in the device 10A, the encryption unit 12D encrypts the anonymized hash (corresponding to the user ID in user data) with a pre-prepared secret key a to obtain Company A's ID-encrypted data (step S3D). Similarly, in the device 10B, the encryption unit 12D encrypts the anonymized hash (corresponding to the user ID in user data) with a pre-prepared secret key b to obtain Company B's ID-encrypted data (step S4D).

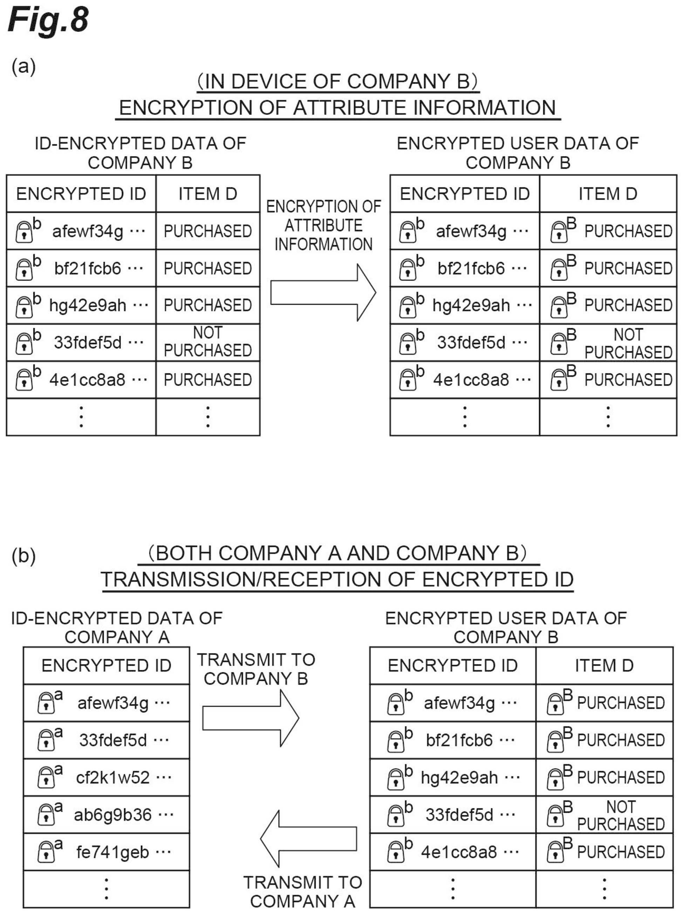

Next, as shown in FIG. 8(a), in the device 10B, the encryption unit 12D encrypts the attribute information in Company B's ID-encrypted data obtained in step S4D using a pre-prepared secret key B with a homomorphic encryption scheme that allows aggregate processing, thereby generating Company B's encrypted user data (step S4E). The attribute information in the generated encrypted user data is configured with binary values in a predetermined format to allow aggregate processing in the encrypted state.

Next, as shown in FIG. 8(b), in the device 10A, the data transmission/reception unit 12E transmits Company A's encrypted ID included in Company A's ID-encrypted data obtained in step S3D to the data transmission/reception unit 12E of the device 10B (step S3E), and in the device 10B, the data transmission/reception unit 12E transmits Company B's encrypted user data (i.e., data including Company B's encrypted ID and encrypted attribute information) obtained in step S4E to the data transmission/reception unit 12E of the device 10A (step S4F).

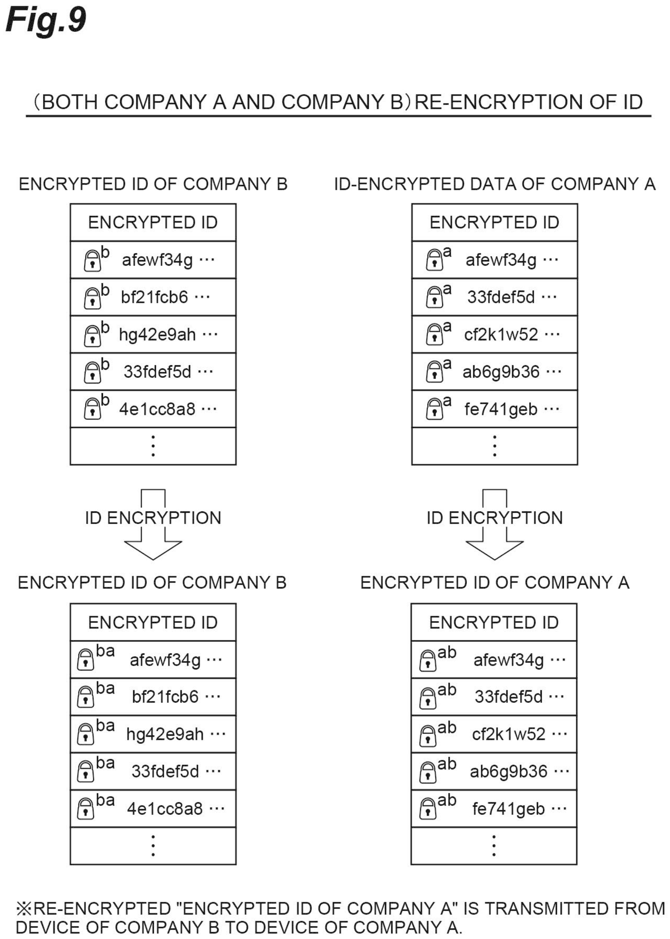

Next, as shown in FIG. 9, in the device 10A, the encryption unit 12D re-encrypts Company B's encrypted ID included in Company B's encrypted user data received from the device 10B with secret key a, to obtain Company B's encrypted ID encrypted with both secret keys a and b (step S3F). Similarly, in the device 10B, the encryption unit 12D re-encrypts Company A's encrypted ID received from the device 10A with secret key b, to obtain Company A's encrypted ID encrypted with both secret keys a and b (step S4G). Then, in the device 10B, the data transmission/reception unit 12E transmits "Company A's encrypted ID encrypted with both secret keys a and b" obtained in step S4G to the device 10A (step S4H), and the data transmission/reception unit 12E of the device 10A receives the above Company A's encrypted ID (step S3G).

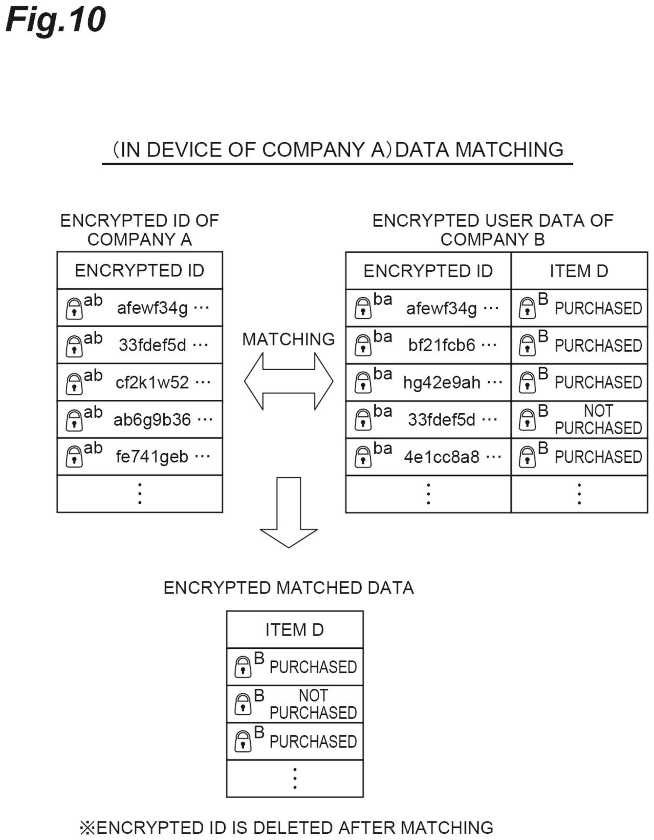

Next, as shown in FIG. 10, in the device 10A, the data matching unit 13A replaces "encrypted ID encrypted with secret key a" obtained by ID encryption in step S3D with "Company A's encrypted ID encrypted with both secret keys a and b" received in step S3G to obtain Company A's encrypted ID shown in the upper left of FIG. 10. The data matching unit 13A also replaces "Company B's encrypted ID encrypted with secret key b" in "Company B's encrypted user data" received in step S3E with "Company B's encrypted ID encrypted with both secret keys a and b" obtained by re-encryption in step S3F to obtain Company B's encrypted user data shown in the upper right of FIG. 10. Then, the data matching unit 13A matches Company A's encrypted user data and Company B's encrypted user data using "Company A's encrypted ID encrypted with both secret keys a and b" and "Company B's encrypted ID encrypted with both secret keys a and b" as keys (step S5). If "Company A's encrypted ID encrypted with both secret keys a and b" and "Company B's encrypted ID encrypted with both secret keys a and b" match, the attribute information in Company A's encrypted user data and the encrypted attribute information in Company B's encrypted user data are combined as one record in the encrypted matched data, and after the combination, "Company A's encrypted ID encrypted with both secret keys a and b" and "Company B's encrypted ID encrypted with both secret keys a and b" are deleted to obtain encrypted matched data. However, in this embodiment, the attribute information in Company A's user data is not subject to preliminary execution processing, so as shown in the lower part of FIG. 10, the encrypted matched data is composed of Company B's encrypted attribute information. As described above, the encrypted attribute information is configured with a predetermined binary value format and can be processed in the encrypted state. Of course, since Company B's attribute information is encrypted, its content cannot be known in Company A, and encrypted matched data is generated without disclosing the content of attribute information that should be kept confidential by Company B to Company A.

Returning to FIGS. 2 and 4, as described above, the data matching unit 13A matches preliminary execution data A and preliminary execution data B, and the aggregate processing unit 13B counts the number of records for each of "purchased" and "not purchased" in item D for the matched records to obtain aggregate processing results for each of "purchased" and "not purchased" (step S6). At this time, as described above, the content of item D in Company B's encrypted attribute information in the encrypted matched data is encrypted, so its content cannot be known in the device 10A of Company A. However, as described above, since item D in Company B's encrypted attribute information in the encrypted matched data is configured with a predetermined binary value format, it is possible to calculate the total number of records corresponding to the binary value format for each of "purchased" and "not purchased" in the encrypted state.

Then, the disclosure limitation processing unit 13C performs disclosure limitation process on the above aggregate processing results as follows (step S7). For example, as shown in FIG. 4, for aggregate processing results of "purchased" 1884 and "not purchased" 4300 in item D, noise corresponding to consumption of privacy budget 0.1 is added, and as shown at the right end of FIG. 4, aggregate processing results after performing the disclosure limitation process of "purchased" 1900 and "not purchased" 4229 are obtained. Furthermore, the calculation unit 13D calculates a basic value from the aggregate processing results after performing the disclosure limitation process (step S8). Here, for example, "data matching rate" and "data bias" are calculated as basic values. "Data matching rate" means the ratio of the number of matched records to the total number of records subject to data matching, and a data matching rate of 40% is calculated. "Data bias" means the difference between the item-specific ratio for a predetermined item derived from data of a single company and the item-specific ratio for the same predetermined item derived from data matched between companies, and data bias exists for each item for which item-specific ratio is calculated. However, in practice, due to privacy budget constraints, it is difficult to calculate data bias for all items in preliminary execution, so here data bias is calculated for item D, which is the main item for aggregation. For item D, the item-specific ratio ("purchase" ratio) of 31% is calculated by Company B alone in step S10 of FIG. 2 executed in parallel with steps S3 to S8 described above, and the item-specific ratio ("purchase" ratio) derived from data matched between Company A and Company B shown in FIG. 4 is also 31%, so data bias "0%" is calculated as the basic value.

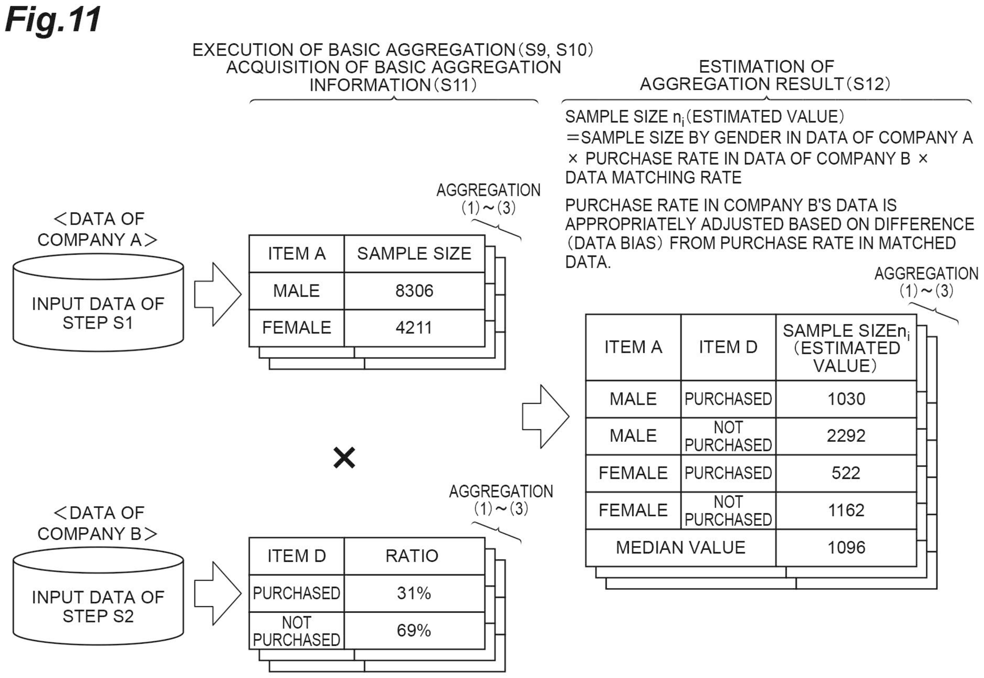

Returning to FIG. 2, in the device 10A, the basic aggregation information acquisition unit 14A calculates the sample size and item-specific ratio, which are basic aggregation information of the user data of the device 10A (step S9). For example, for aggregation (1) of item A × D, as shown in FIG. 11, the sample size and ratio for each of male and female in item A (gender) in Company A's data are calculated, and for aggregation (2) of item B × D and aggregation (3) of item B × C × D, the sample size and ratio for each age group (20s to 80s) in item B (age group) in Company A's data are also calculated.

Similarly, in the device 10B, the basic aggregation information provision unit 14B calculates the sample size and item-specific ratio, which are basic aggregation information of the user data of the device 10B, and provides them to the device 10A (step S10). For example, for aggregation (1) of item A × D and aggregation (2) of item B × D, as shown in FIG. 11, the sample size and ratio for each of "purchased" and "not purchased" in item D (purchase history) in Company B's data are calculated, and for aggregation (3) of item B × C × D, the sample size and ratio for "item C (address) × item D (purchase history)" in Company B's data are calculated for each of "inside Tokyo × purchased", "outside Tokyo × purchased", "inside Tokyo × not purchased", and "outside Tokyo × not purchased".

Then, the basic aggregation information acquisition unit 14A of the device 10A receives the basic aggregation information (sample size and item-specific ratio) of the device 10B provided (transmitted) by the basic aggregation information provision unit 14B of the device 10B, thereby acquiring the basic aggregation information of the devices 10A and 10B (step S11).

Next, the estimation unit 15 estimates the sample size of the aggregation result based on the basic aggregation information of the devices 10A and 10B acquired by the basic aggregation information acquisition unit 14A, and a basic value calculated by the basic value calculation unit 13, for example, as follows (step S12). For item A × D in the aggregation pattern (item A × D, item B × D, item B × C × D), as shown in FIG. 11,

$$\text{Sample size } n_i \text{ (estimated value)} =$$

$$\text{Sample size by gender in Company A's data} \times \text{purchase rate in Company}$$

$$\text{B's data} \times \text{data matching rate} \quad (1)$$

By applying the above formula (1), the sample size of the aggregation result is estimated. For example, for item A (male) × item D (purchased), multiplying the sample size for males in Company A's data (8306), the purchase rate in Company B's data (31%), and the data matching rate (40%) yields an estimated sample size of 1030. Similarly, for item A (male) × item D (not purchased), item A (female) × item D (purchased), and item A (female) × item D (not purchased), the estimated sample sizes are 2292, 522, and 1162, respectively. The median of the above four estimated values for item A × item D (1030, 2292, 522, 1162) is 1096, which is the value between the second largest (1030) and third largest (1162). Similarly, for item B × D and item B × C × D in the aggregation pattern, the median of the estimated sample sizes is 860 and 541, respectively. In this embodiment, the "median" of the estimated sample sizes is used as an example, but the mean, minimum, etc. may also be used. In this embodiment, as described above, the "data bias" among the basic values calculated in step S8 of FIG. 2 was 0%, but if there is data bias for the main item (here, item D), it is desirable to adjust (correct) the "purchase rate in Company B's data" in formula (1) for calculating sample size $n_i$ (estimated value) so that it approaches the purchase rate in the matched data by the amount of data bias.

Returning to FIG. 2, in the next step S13, the evaluation unit 16 quantitatively evaluates the influence of noise for each combination included in the aggregation pattern, based on the estimated sample size of the aggregation result (here, the median of the estimated sample sizes), as follows. In this embodiment, as an evaluation index for the influence of noise, the variance of the change in sample size n is used as an example.

[Equation 1]

$$V\left[\frac{n+z}{n}\right] = \frac{1}{n^2}V[z] \quad \text{(n is a constant)} \quad (2)$$

The variance of noise z is as follows.
[Equation 2]

$$V[z] = 2\left(\frac{1}{\varepsilon}\right)^2 \quad (3)$$

And the value varies depending on the probability distribution used for generating noise. Substituting the above variance of noise z into formula (2) yields as follows.
[Equation 3]

$$V\left[\frac{n+z}{n}\right] = \frac{2}{(n\varepsilon)^2} \quad (4)$$

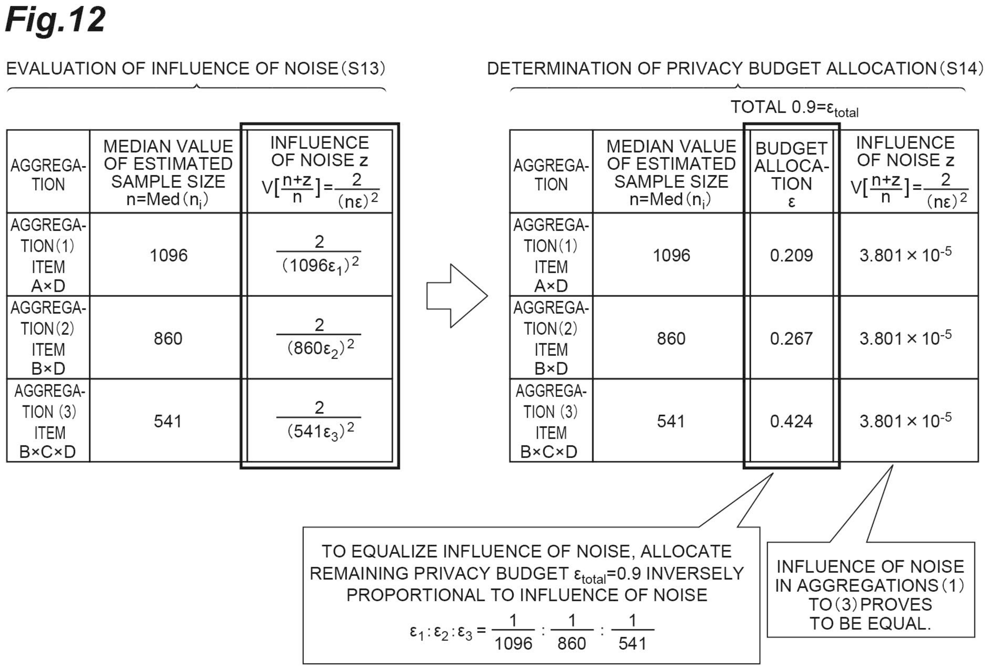

Here, let the privacy budget allocations for aggregations (1) to (3) be $\varepsilon_1$, $\varepsilon_2$, and $\varepsilon_3$, respectively. By using formula (4) above, as shown in the table on the left side of FIG. 12, the evaluation indices for the influence of noise for aggregations (1) to (3) are obtained as follows.

[Equation 4]

$$\frac{2}{(1096\varepsilon_1)^2} \qquad \frac{2}{(860\varepsilon_2)^2} \qquad \frac{2}{(541\varepsilon_3)^2}$$

Note that it is not essential to use the variance of the change in sample size n as the evaluation index, and other indices for measuring data accuracy (e.g., sample error rate, statistical power, etc.) may be used depending on the aggregation purpose.

In the next step S14, the allocation determination unit 17 determines the allocation of the privacy budget for each combination based on the evaluation results for each combination obtained by the evaluation unit 16, as follows. For example, the allocation determination unit 17 allocates the remaining privacy budget $\varepsilon_{total}$ "0.9" to each aggregation budget allocation $\varepsilon_1$, $\varepsilon_2$, $\varepsilon_3$ by weighting with a function inversely proportional to the magnitude of the influence of noise, so as to equalize the influence of noise. Specifically, as shown on the right side of FIG. 12, the remaining privacy budget $\varepsilon_{total}$ "0.9" is allocated to each aggregation budget allocation $\varepsilon_1$, $\varepsilon_2$, $\varepsilon_3$ in the below ratio, resulting in $\varepsilon_1 = 0.209$, $\varepsilon_2 = 0.267$, $\varepsilon_3 = 0.424$.

[Equation 5]

$$\varepsilon_1 : \varepsilon_2 : \varepsilon_3 = \frac{1}{1096} : \frac{1}{860} : \frac{1}{541}$$

At this time, the influence of noise z in aggregations (1) to (3) is equalized to be $3.801 \times 10^{-5}$.

According to the first embodiment described above, by quantitatively evaluating the influence of noise for each combination included in the aggregation pattern and determining the allocation of the privacy budget for each combination based on the evaluation results, it is possible to optimize the allocation of the privacy budget. In addition, by performing preliminary aggregation in advance on the actually input user data of both Company A and Company B, it is possible to appropriately calculate a basic value such as data matching rate based on the actual input data and use them in aggregate processing, thereby contributing to the optimization of aggregate processing.

(Second Embodiment)

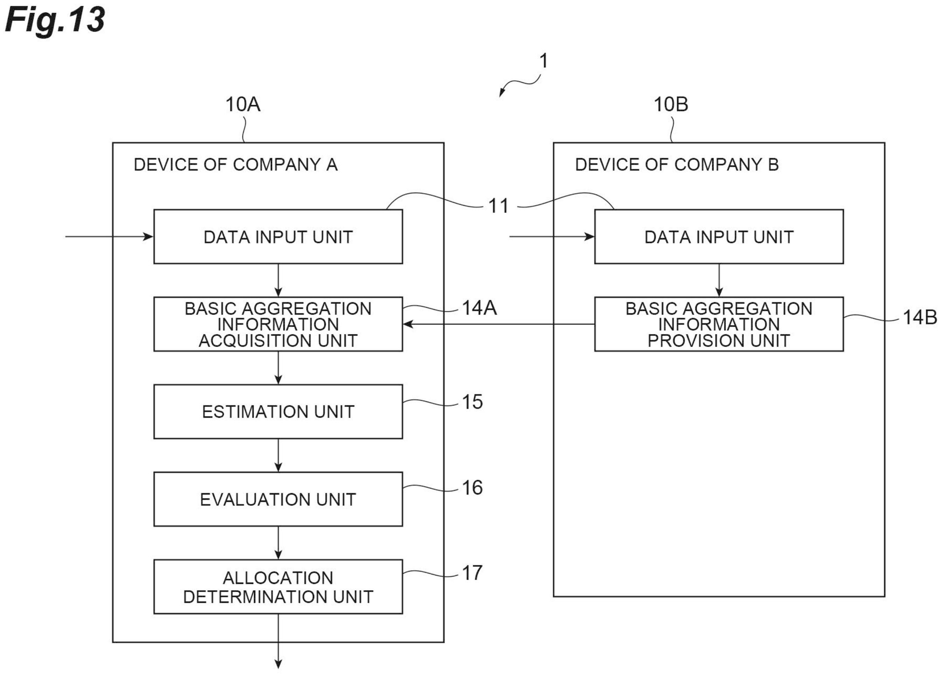

Next, as the second embodiment, an embodiment in which known values or estimated values are used as basic values without performing preliminary execution as in the first embodiment will be described. Since preliminary execution is not performed, as shown in FIG. 13, the information system 1 does not require functional units corresponding to the basic value calculation unit 13 and the preliminary execution data generation unit 12 in FIG. 1. Therefore, the device 10A includes a data input unit 11, a basic aggregation information acquisition unit 14A, an estimation unit 15, an evaluation unit 16, and an allocation determination unit 17, while the device 10B includes a data input unit 11 and a basic aggregation information provision unit 14B. The functions of each unit have been described in the first embodiment, so redundant explanations are omitted here.

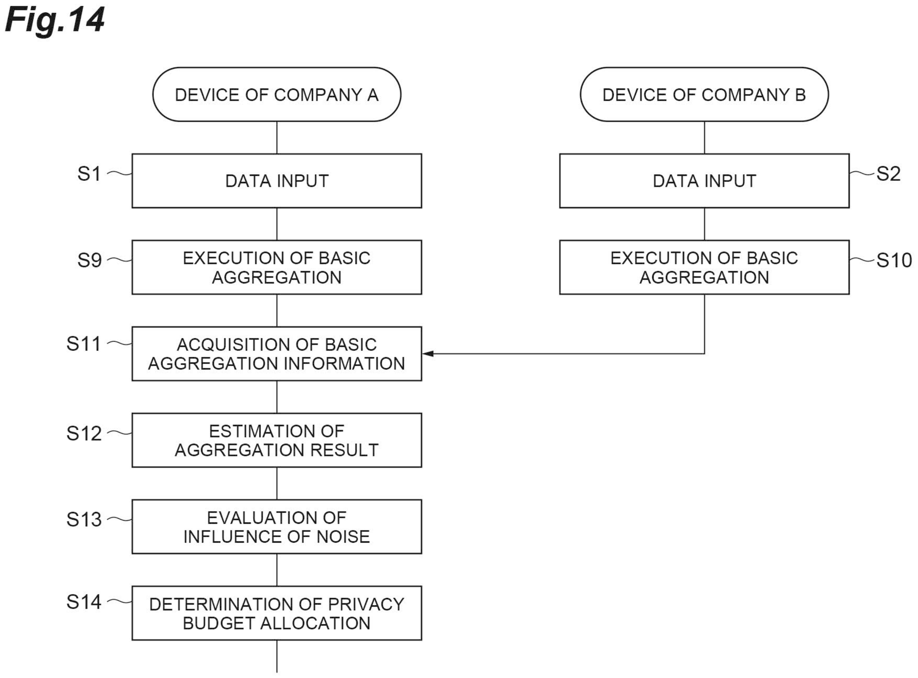

As shown in FIG. 14, the processing in the second embodiment does not include generation of preliminary execution data (steps S3 and S4 in FIG. 2) and processing related to basic value calculation (steps S5 to S8 in FIG. 2). The processing of steps S1, S2, S9 to S11 shown in FIG. 14 is the same as in the first embodiment, so redundant explanations are omitted.

In step S12, the estimation unit 15 estimates the sample size of the aggregation result using the same method as in the first embodiment, based on the "basic aggregation information" of the devices 10A and 10B acquired by the basic aggregation information acquisition unit 14A in step S11, and a "basic value" using a known value or an estimated value. Here, for each item in the aggregation pattern (item A $\times$ D, item B $\times$ D, item B $\times$ C $\times$ D), the sample size of the aggregation result (here, the median of the estimated sample sizes) is 1096, 860, and 541, respectively. Note that the "median" of the estimated sample sizes is used as an example in this embodiment, but the mean, minimum, etc. may also be used.

In the next step S13, the evaluation unit 16 quantitatively evaluates the influence of noise for each combination included in the aggregation pattern using the same method as in the first embodiment, based on the estimated sample size of the aggregation result. As an evaluation index for the influence of noise, the variance of the change in sample size n is used.

[Equation 6]

$$V\left[\frac{n+z}{n}\right] = \frac{1}{n^2} V[z] = \frac{2}{(n\varepsilon)^2} \quad \text{(n is a constant)} \quad (5)$$

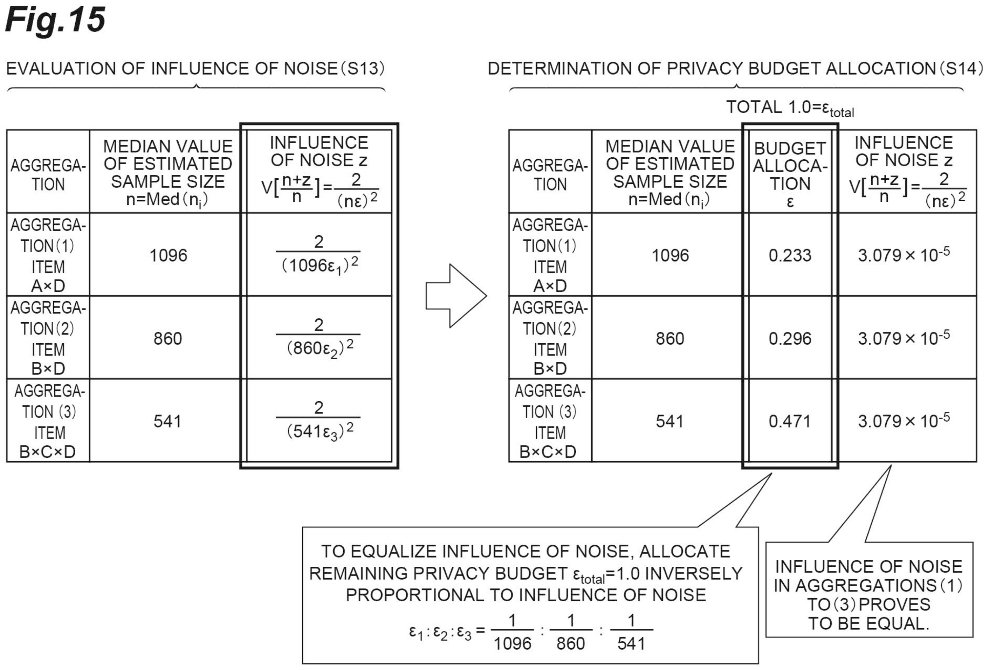

By using the formula (5) above, as shown in the table on the left side of FIG. 15, the evaluation indices for the influence of noise for aggregations (1) to (3) are obtained as follows.

[Equation 7]

$$\frac{2}{(1096\varepsilon_1)^2} \qquad \frac{2}{(860\varepsilon_2)^2} \qquad \frac{2}{(541\varepsilon_3)^2}$$

Note that other indices for measuring data accuracy (e.g., sample error rate, statistical power, etc.) may also be used depending on the aggregation purpose.

In the next step S14, the allocation determination unit 17 determines the allocation of the privacy budget for each combination based on the evaluation results for each combination obtained by the evaluation unit 16, as follows. Here, as the first allocation example, an example in which each combination is weighted by a function inversely proportional to the magnitude of the influence of noise for each combination, and the allocation of the privacy budget for each combination is determined, as in the first embodiment, will be described. As the second allocation example, an example in which the allocation of the privacy budget for each combination is determined so as to satisfy the required level of accuracy for suppressing the influence of noise for each combination will be described.

In the first allocation example, the allocation determination unit 17 determines the allocation of the remaining privacy budget $\varepsilon_{total}$ "1.0" by weighting with a function inversely proportional to the magnitude of the influence of noise to equalize the influence of noise. In the second embodiment, since "generation of preliminary execution data (steps S3 and S4 in FIG. 2)" that consumes privacy budget is not performed, the remaining privacy budget $\varepsilon_{total}$ is "1.0", unlike the first embodiment. Specifically, as shown on the right side of FIG. 15, the remaining privacy budget $\varepsilon_{total}$ "1.0" is allocated to each aggregation budget allocation $\varepsilon_1$, $\varepsilon_2$, $\varepsilon_3$ in the below ratio, resulting in $\varepsilon_1 = 0.233$, $\varepsilon_2 = 0.296$, $\varepsilon_3 = 0.471$.

[Equation 8]

$$\varepsilon_1 : \varepsilon_2 : \varepsilon_3 = \frac{1}{1096} : \frac{1}{860} : \frac{1}{541}$$

At this time, the influence of noise z in aggregations (1) to (3) is equalized to be $3.079 \times 10^{-5}$.

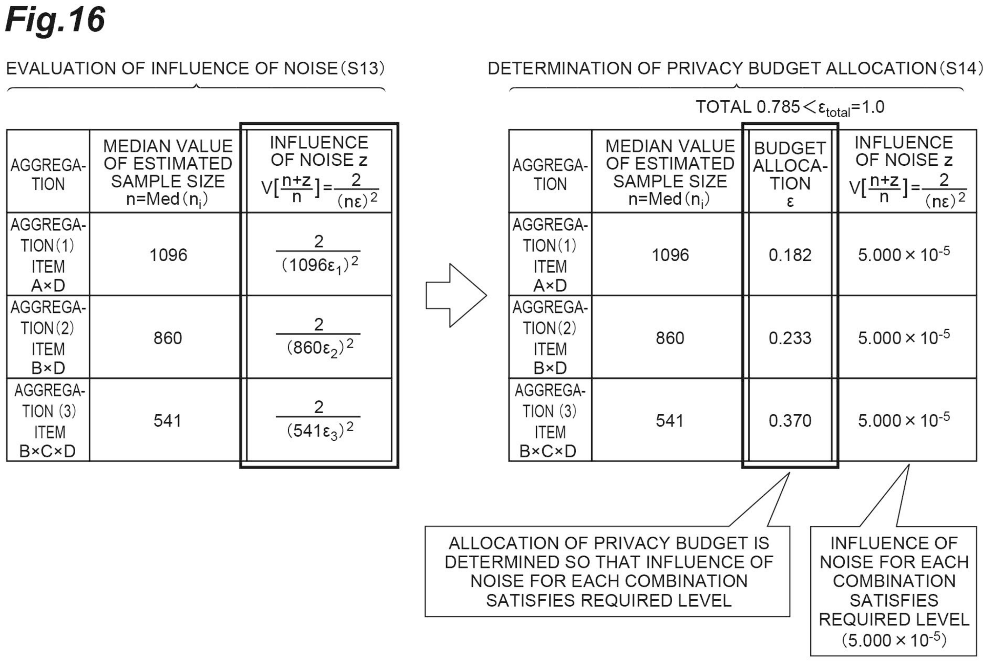

In the second allocation example, the allocation determination unit 17 determines the allocation of the remaining privacy budget $\varepsilon_{total}$ "1.0" for each combination so as to satisfy the required level of accuracy for suppressing the influence of noise for each combination. In this case, if the required level of accuracy cannot be achieved within the range of the privacy budget, it is possible not to perform specific aggregations among aggregations (1) to (3), or to relax the required level of accuracy. As one example of a method for quantitatively setting the required level of accuracy, a method in which the level at which items to be detected (e.g., purchase rate by attribute (gender or age group), difference in number of purchasers by attribute (gender or age group), etc.) can be detected from the aggregation results is set as the required level of accuracy can be considered. For example, as shown on the right side of FIG. 16, an example is shown in which the allocation of the privacy budget is determined so that the influence of noise for each combination satisfies the required level of accuracy (for example, $5.000 \times 10^{-5}$) (here, the allocation is set to match the required level). In this case, the influence of noise for each combination satisfies the required level of accuracy (for example, $5.000 \times 10^{-5}$), and the remaining privacy budget is allocated to budget allocations $\varepsilon_1$, $\varepsilon_2$, $\varepsilon_3$, resulting in $\varepsilon_1 = 0.182$, $\varepsilon_2 = 0.233$, $\varepsilon_3 = 0.370$. Therefore, the total consumed privacy budget is 0.785, and there is a surplus of the privacy budget compared to the remaining privacy budget $\varepsilon_{total}$ "1.0".

Note that the method of allocating the privacy budget is not limited to the first and second allocation examples described above, and various allocation methods may be adopted depending on the aggregation purpose.

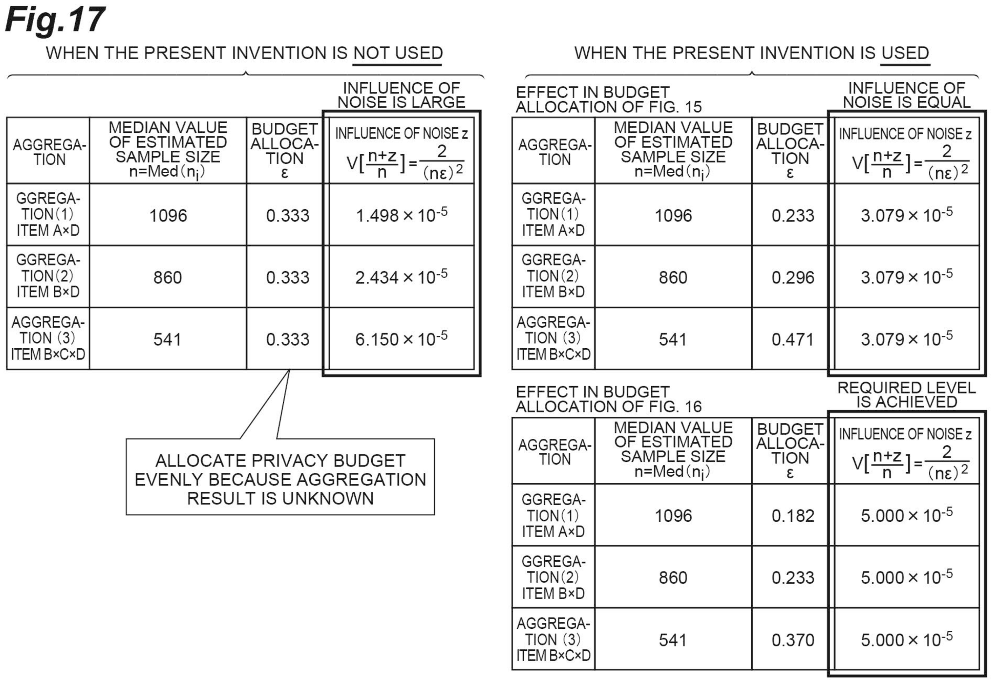

Next, the effects of using the present invention will be described with reference to FIG. 17, comparing with the case where the present invention is not used. As shown on the left side of FIG. 17, when the present invention is not used, since the aggregation results are unknown, the privacy budget $\varepsilon_{total}$ "1.0" is allocated equally to aggregations (1) to (3). In this case, the influence of noise is $1.498 \times 10^{-5}$, $2.434 \times 10^{-5}$, and $6.150 \times 10^{-5}$ for aggregations (1) to (3), respectively, resulting in a large difference in the influence of noise among aggregations (1) to (3).

On the other hand, in the case of using the present invention, in the first allocation example, as shown in the upper right of FIG. 17, the budget allocations for aggregations (1) to (3) are $\varepsilon_1 = 0.233$, $\varepsilon_2 = 0.296$, $\varepsilon_3 = 0.471$, and the influence of noise z in aggregations (1) to (3) is equalized to be $3.079 \times 10^{-5}$. In this way, in the first allocation example, although the entire privacy budget $\varepsilon_{total}$ "1.0" is consumed, the influence of noise z is equalized and relatively low ($3.079 \times 10^{-5}$) for each aggregation, resulting in the effect of suppressing the influence of noise.

In the second allocation example, as shown in the lower right of FIG. 17, the budget allocations for aggregations (1) to (3) are $\varepsilon_1 = 0.182$, $\varepsilon_2 = 0.233$, $\varepsilon_3 = 0.370$, and the total consumed privacy budget is suppressed to 0.785, while the influence of noise z in aggregations (1) to (3) is $5.000 \times 10^{-5}$, satisfying the required level of accuracy ($5.000 \times 10^{-5}$). In this way, in the second allocation example, it is possible to prevent excessive allocation of the privacy budget compared to the required level and suppress the consumption of the budget to the minimum necessary, resulting in the effect of optimizing the allocation.

(Third Embodiment)

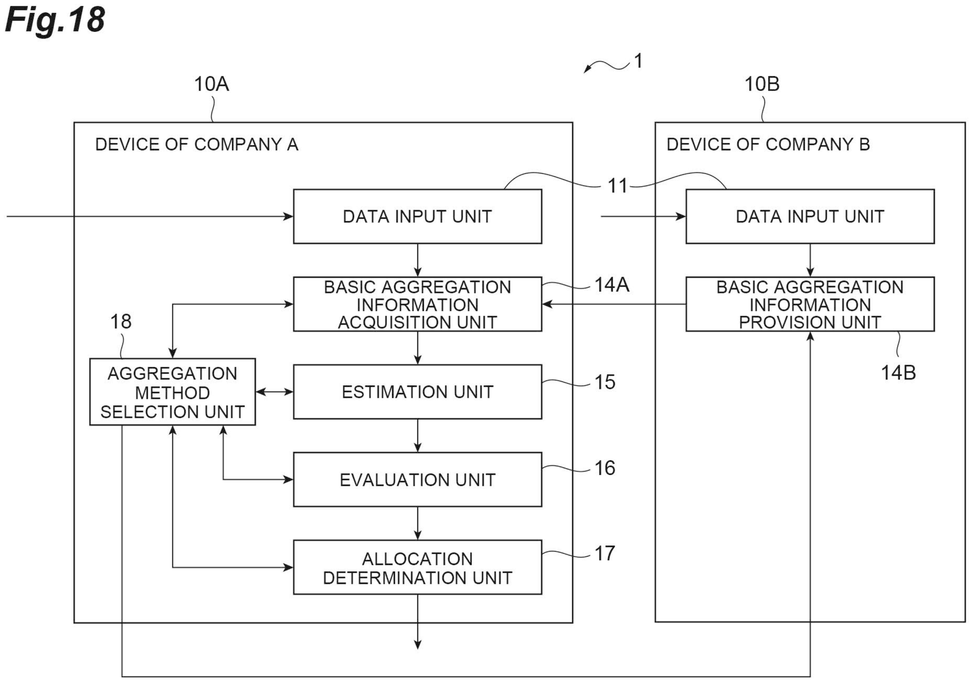

Next, as the third embodiment, an embodiment in which an aggregation method suitable for a predetermined purpose (for example, an aggregation method that can minimize the influence of noise) is selected will be described. As shown in FIG. 18, the configuration of the information system 1 in the third embodiment is a configuration in which an aggregation method selection unit 18 is added to the device 10A in the configuration of the second embodiment (FIG. 13). Note that the configuration of the information system 1 in the third embodiment is not limited to the configuration in FIG. 18, and an aggregation method selection unit 18 may be added to the device 10A in the configuration of the first embodiment (FIG. 1).

The aggregation method selection unit 18 is a functional unit that, for each of multiple aggregation methods that can be adopted when performing aggregation targeting the aggregation pattern, executes acquisition of basic aggregation information by the basic aggregation information acquisition unit 14A, estimation of sample size of aggregation results by the estimation unit 15, evaluation of the influence of noise for each combination by the evaluation unit 16, and determination of the allocation of the privacy budget for each combination by the allocation determination unit 17, compares the results of all aggregation methods, and selects the aggregation method suitable for a predetermined purpose. Below, as an example, a case in which the aggregation method selection unit 18 selects an aggregation method that can minimize the influence of noise within the same privacy budget will be described.

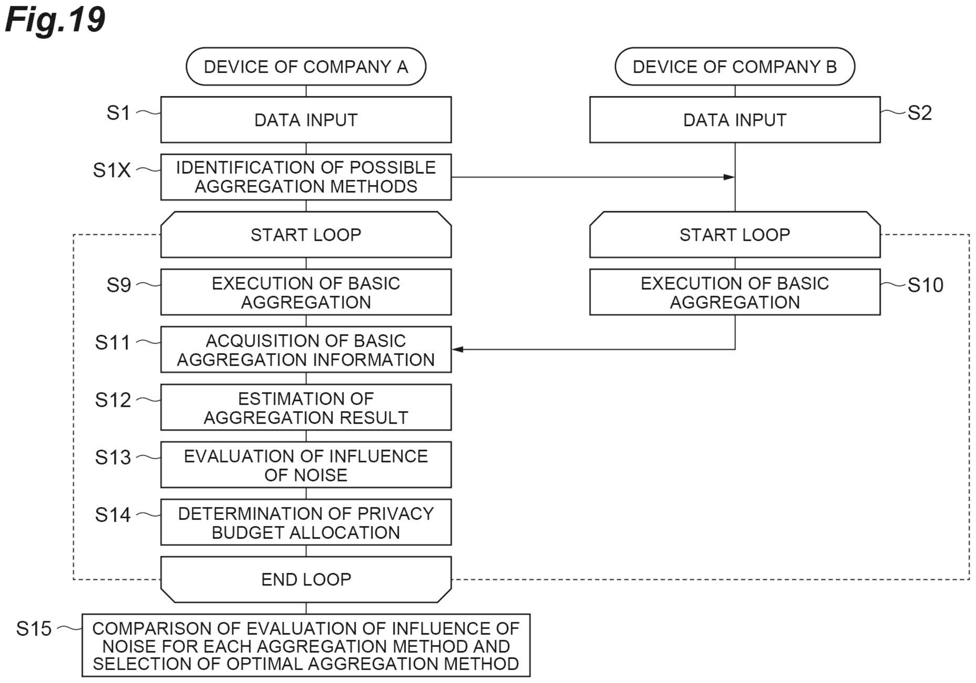

Next, the processing of the third embodiment will be described using the flowchart in FIG. 19. After data input in steps S1 and S2, the aggregation method selection unit 18 identifies possible aggregation methods (step S1X). Here, aggregation method (a), in which each aggregation is executed independently, and aggregation method (b), in which multiple aggregations are executed together, are identified as aggregation methods.

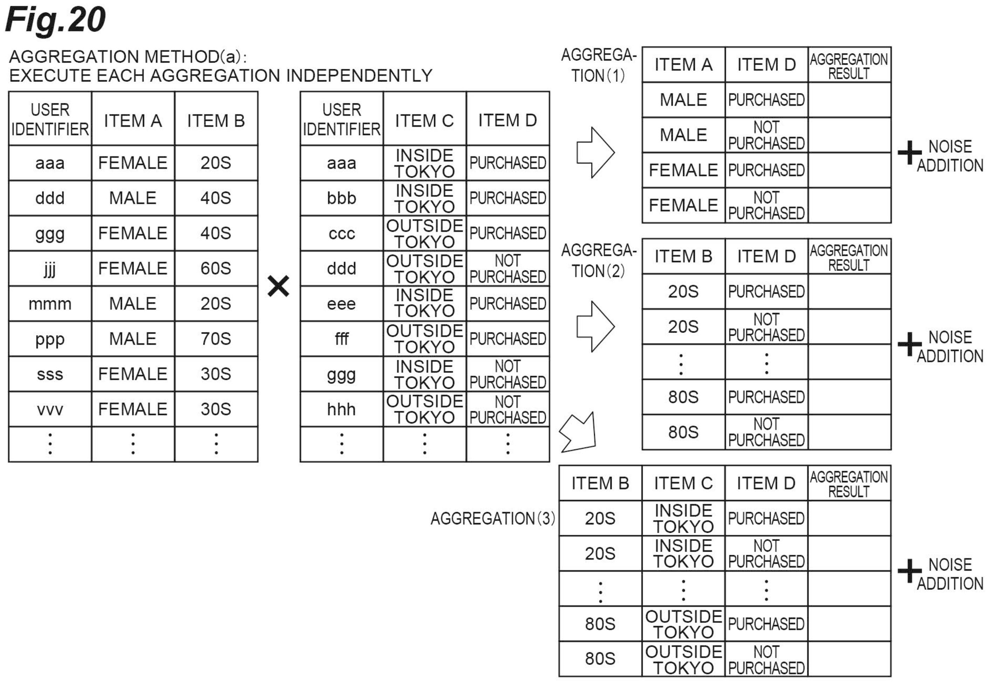

The aggregation method selection unit 18 executes the subsequent processing of steps S9 to S14 for each of aggregation methods (a) and (b). For example, the aggregation method selection unit 18 first executes basic aggregation by the basic aggregation information acquisition unit 14A and the basic aggregation information provision unit 14B according to aggregation method (a) (steps S9 and S10), and acquires the basic aggregation information of the devices 10A and 10B by the basic aggregation information acquisition unit 14A (step S11). Then, the estimation unit 15 estimates the sample size of the aggregation result (step S12), the evaluation unit 16 evaluates the influence of noise for each combination (step S13), and the allocation determination unit 17 determines the allocation of the privacy budget for each combination (step S14). In aggregation method (a), as shown in FIG. 20, aggregations (1) to (3) are executed independently, and noise is added to each aggregation result. In aggregation method (a), since the privacy budgets for each aggregation are combined, it is not possible to allocate a large budget to each aggregation, resulting in higher intensity of added noise.

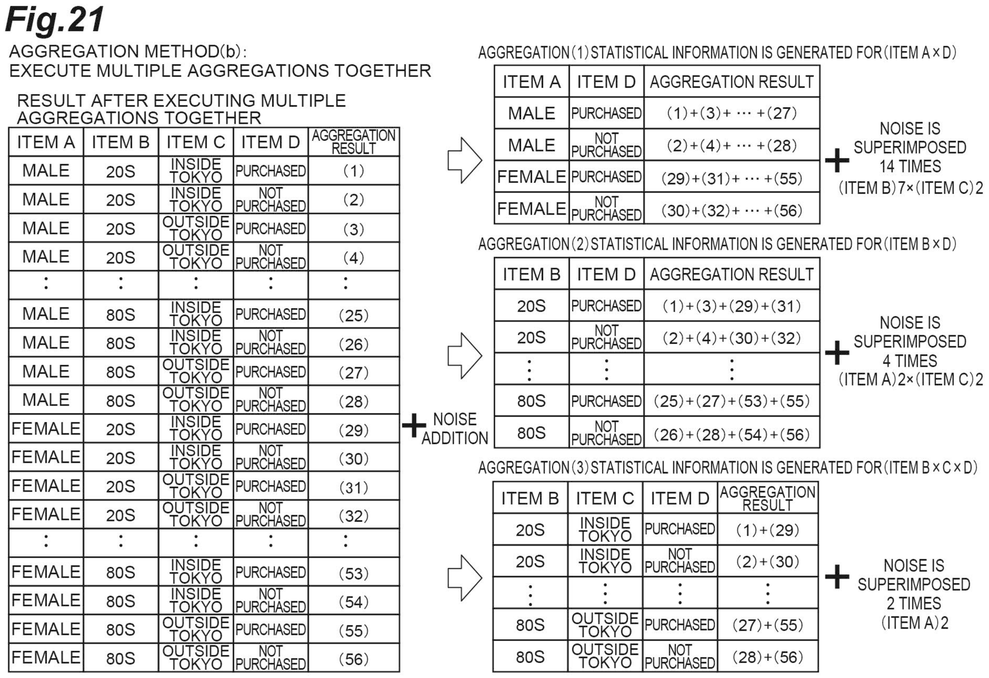

Next, the aggregation method selection unit 18 executes basic aggregation by the basic aggregation information acquisition unit 14A and the basic aggregation information provision unit 14B according to aggregation method (b) (steps S9 and S10), and acquires the basic aggregation information of the devices 10A and 10B by the basic aggregation information acquisition unit 14A (step S11). Then, the estimation unit 15 estimates the sample size of the aggregation result (step S12), the evaluation unit 16 evaluates the influence of noise for each combination (step S13), and the allocation determination unit 17 determines the allocation of the privacy budget for each combination (step S14). In aggregation method (b), as shown in FIG. 21, multiple aggregations are executed together, and statistical information for each aggregation is generated based on the results. In aggregation method (b), since the number of aggregations is reduced, it is possible to allocate a larger privacy budget, thereby reducing the intensity of added noise. On the other hand, since statistical information for each aggregation is generated by summing multiple aggregation results with added noise (rightmost cells in the left table in FIG. 21), noise is superimposed multiple times according to the number of summed cells. For example, in aggregation (1), for item A (male) $\times$ item D (purchased), statistical information for the aggregation is generated by summing 14 cells (cells (1), (3), ..., (27)) in the rightmost column of the left table, resulting in noise being superimposed 14 times. Similarly, in aggregation (2), noise is superimposed 4 times, and in aggregation (3), noise is superimposed 2 times.

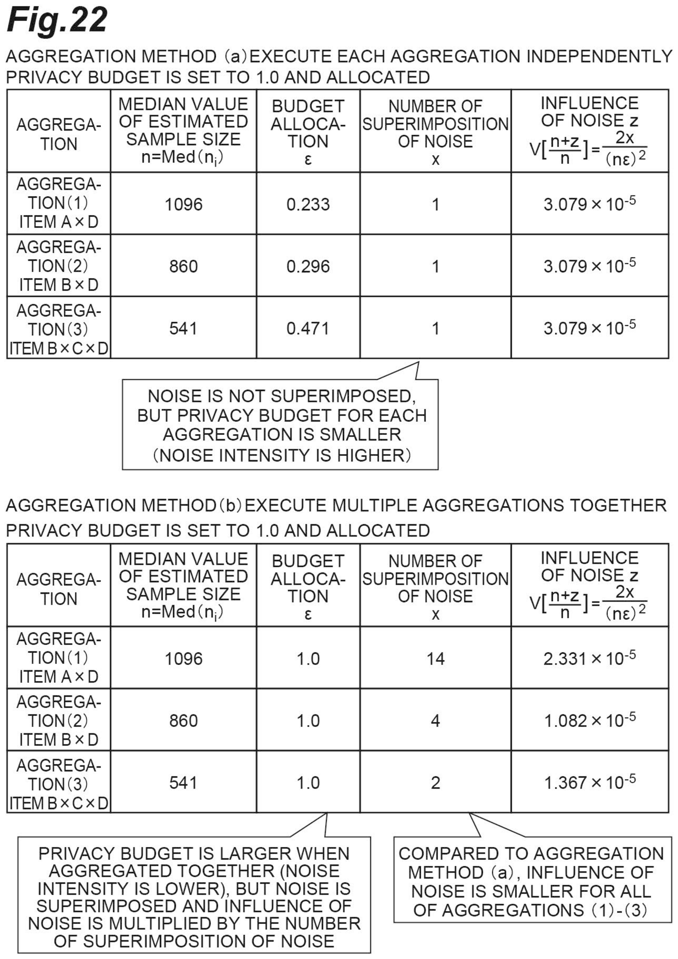

After the processing of steps S9 to S14 is completed for all identified aggregation methods (aggregation methods (a) and (b)), the aggregation method selection unit 18 compares the evaluation of the influence of noise for each aggregation method and selects the optimal aggregation method (step S15). FIG. 22 shows an example of the results of quantitatively calculating the influence of noise for aggregation methods (a) and (b). Here, both aggregation methods (a) and (b) allocate the privacy budget to 1.0. As shown in the rightmost column of the left table in FIG. 22, for aggregation method (a), the influence of noise is $3.079 \times 10^{-5}$ for each aggregation, while as shown in the rightmost column of the right table in FIG. 22, for aggregation method (b), the influence of noise is $2.331 \times 10^{-5}$, $1.082 \times 10^{-5}$, and $1.367 \times 10^{-5}$ for aggregations (1) to (3), respectively. In this way, aggregation method (b) results in smaller influence of noise for all aggregations (1) to (3) compared to aggregation method (a), so aggregation method (b) is selected.

Note that, as a selection method, in addition to the method based on the degree of influence of noise as described above, methods such as selecting based on overall balance or comparing the degree of influence of noise for specific aggregations with high priority for each aggregation method may be adopted. As an example of the former (selection based on overall balance), methods such as avoiding aggregation methods that include aggregations with extremely large influence of noise or evaluating each aggregation method based on the average degree of influence of noise for each aggregation can be cited.

According to the third embodiment described above, it is possible to select an appropriate aggregation method suitable for the purpose from the identified aggregation methods (for example, an aggregation method that can minimize the influence of noise, an aggregation method with the best overall balance, an aggregation method in which the influence of noise for specific aggregations with high priority is minimized, etc.).

Note that, in the third embodiment, a configuration in which an aggregation method selection unit 18 is added to the device 10A in the configuration of the second embodiment (FIG. 13) was described, but even if an aggregation method selection unit 18 is added to the device 10A in the configuration of the first embodiment (FIG. 1), the same effects as the third embodiment can be achieved.

In addition, regarding the method of allocating the privacy budget, various allocation methods such as the first and second allocation examples described in the second embodiment can be applied not only to the second embodiment but also to the first and third embodiments.

(Modification Example 1)

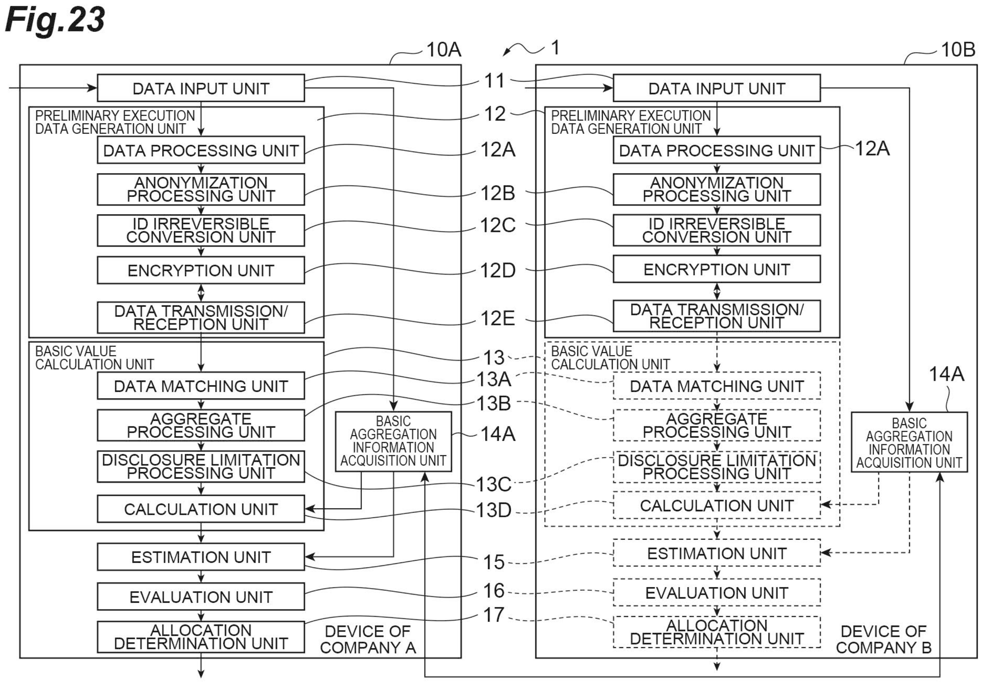

In the first embodiment, as shown in FIG. 1, a configuration was described in which the device 10A of Company A includes functional units such as the basic value calculation unit 13, estimation unit 15, evaluation unit 16, and allocation determination unit 17, while the device 10B of Company B does not include these functional units. However, the configuration is not limited to this, and as Modification Example 1, both the devices 10A and 10B of each company may have the same configuration including the above functional units. Specifically, the devices 10A and 10B may be configured as shown in FIG. 23, and the processing of basic value calculation, estimation, evaluation, and allocation determination can be executed by either device. For example, in the case where the device 10A executes the processing of basic value calculation, estimation, evaluation, and allocation determination among the devices 10A and 10B, the basic aggregation information acquisition unit 14A of the device 10B calculates basic aggregation information from input data to the device 10B and provides the obtained basic aggregation information of Company B to the basic aggregation information acquisition unit 14A of the device 10A. In this case, the basic value calculation unit 13, estimation unit 15, evaluation unit 16, and allocation determination unit 17 of the device 10B do not execute processing (indicated by dashed lines in FIG. 23). Even in such Modification Example 1, the same effects as the first embodiment can be obtained.

(Modification Example 2)

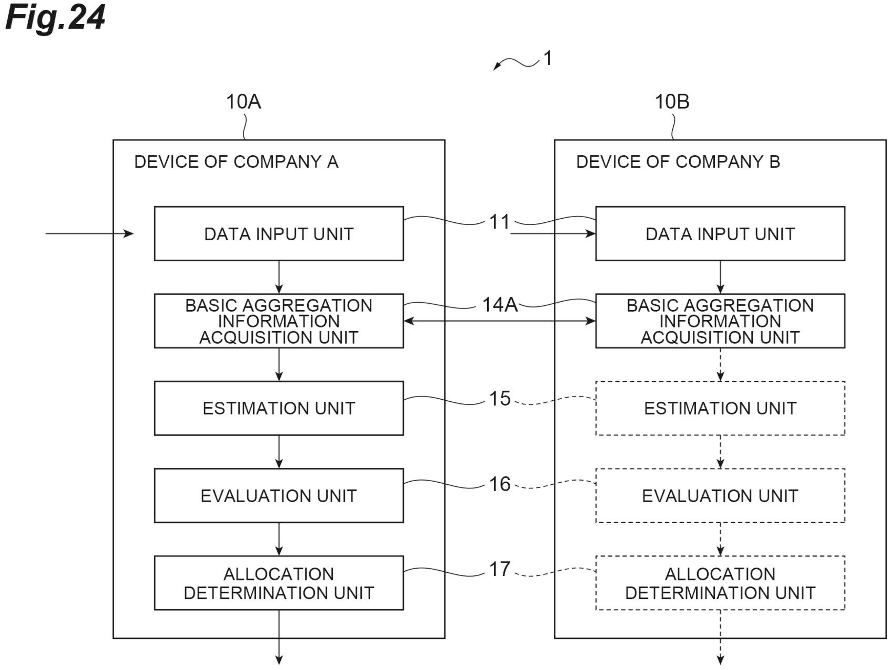

In the second embodiment, as shown in FIG. 13, a configuration was described in which the device 10A of Company A includes functional units such as the estimation unit 15, evaluation unit 16, and allocation determination unit 17, while the device 10B of Company B does not include these functional units. However, the configuration is not limited to this, and as Modification Example 2, both the devices 10A and 10B of each company may have the same configuration including the above functional units. Specifically, the devices 10A and 10B may be configured as shown in FIG. 24, and the processing of estimation, evaluation, and allocation determination can be executed by either device. For example, in the case where the device 10A executes the processing of estimation, evaluation, and allocation determination among the devices 10A and 10B, the basic aggregation information acquisition unit 14A of the device 10B calculates basic aggregation information from input data to the device 10B and provides the obtained basic aggregation information of Company B to the basic aggregation information acquisition unit 14A of the device 10A. In this case, the estimation unit 15, evaluation unit 16, and allocation determination unit 17 of the device 10B do not execute processing (indicated by dashed lines in FIG. 24). Even in such Modification Example 2, the same effects as the second embodiment can be obtained.

This disclosure includes the following points [1] to [10].

[1] An information processing device comprising:

a basic aggregation information acquisition unit that acquires basic aggregation information of both the information processing device itself and a counterpart device, each holding user data including a user ID and attribute information related to a user;

an estimation unit that estimates sample size of an aggregation result based on the basic aggregation information of the information processing device itself and the counterpart device acquired by the basic aggregation information acquisition unit, and a basic value used for estimating the sample size of the aggregation result;

an evaluation unit that quantitatively evaluates influence of noise for each combination included in an aggregation pattern containing multiple combinations of data items included in the attribute information, based on the sample size of the aggregation result estimated by the estimation unit; and

an allocation determination unit that determines an allocation of a privacy budget for noise for each combination for aggregation targeting the aggregation pattern, within a predetermined range of the privacy budget, based on evaluation results for each combination obtained by the evaluation unit.

[2] The information processing device according to [1], further comprising a basic value calculation unit that calculates the basic value from the user data of the information processing device itself and encrypted user data of the counterpart device, wherein the estimation unit uses the basic value calculated by the basic value calculation unit as the basic value for estimating the sample size of the aggregation result.

[3] The information processing device according to [1], wherein the estimation unit uses a known basic value or a basic value obtained in advance by estimation as the basic value for estimating the sample size of the aggregation result.

[4] The information processing device according to any one of [1] to [3], wherein the evaluation unit uses a predetermined index related to data accuracy of the estimated aggregation result as an evaluation index for influence of noise, and quantitatively evaluates the influence of noise for each combination included in the aggregation pattern.

[5] The information processing device according to any one of [1] to [4], wherein the allocation determination unit determines the allocation of the privacy budget for each combination based on weighting for each combination by a function dependent on magnitude of the influence of noise for each combination.

[6] The information processing device according to any one of [1] to [4], wherein the allocation determination unit determines the allocation of the privacy budget for each combination based on a required level of accuracy for suppressing the influence of noise for each combination.

[7] The information processing device according to any one of [1] to [4], wherein the allocation determination unit determines the allocation of the privacy budget for each combination based on weighting for each combination by a function dependent on magnitude of the influence of noise for each combination, under a condition that a required level of accuracy for suppressing the influence of noise for each combination is satisfied.

[8] The information processing device according to any one of [1] to [7], further comprising an aggregation method selection unit that, for each of multiple aggregation methods that can be adopted when performing aggregation targeting the aggregation pattern, lets the basic aggregation information acquisition unit acquire the basic aggregation information, lets the estimation unit estimate the sample size of the aggregation result, lets the evaluation unit evaluate the influence of noise for each combination, lets the allocation determination unit determine the allocation of the privacy budget for each combination, and selects an aggregation method suitable for a predetermined purpose based on comparison results of all aggregation methods.

[9] An information system comprising:

> a first device comprising:

>> a basic aggregation information acquisition unit that acquires basic aggregation information of both the first device and a second device, each holding user data including a user ID and attribute information related to a user;
>> an estimation unit that estimates sample size of an aggregation result based on the basic aggregation information of the first device and the second device acquired by the basic aggregation information acquisition unit, and a basic value used for estimating the sample size of the aggregation result;
>> an evaluation unit that quantitatively evaluates influence of noise for each combination included in an aggregation pattern containing multiple combinations of data items included in the attribute information, based on the sample size of the aggregation result estimated by the estimation unit; and
>> an allocation determination unit that determines an allocation of a privacy budget for noise for each combination for aggregation targeting the aggregation pattern, within a predetermined range of the privacy budget, based on evaluation results for each combination obtained by the evaluation unit, and

> the second device that provides the basic aggregation information acquisition unit with the basic aggregation information of the user data of the second device.

[10] An information processing method comprising:

> a step in which an information processing device acquires basic aggregation information of both the information processing device itself and a counterpart device, each holding user data including a user ID and attribute information related to a user;
> a step in which the information processing device estimates sample size of an aggregation result based on the acquired basic aggregation information of the information processing device itself and the counterpart device, and a basic value used for estimating the sample size of the aggregation result;
> a step in which the information processing device quantitatively evaluates influence of noise for each combination included in an aggregation pattern containing multiple combinations of data items included in the attribute information, based on the estimated sample size of the aggregation result; and
> a step in which the information processing device determines an allocation of a privacy budget for noise for each combination for aggregation targeting the aggregation pattern, within a predetermined range of the privacy budget, based on evaluation results for each combination obtained by the evaluation.

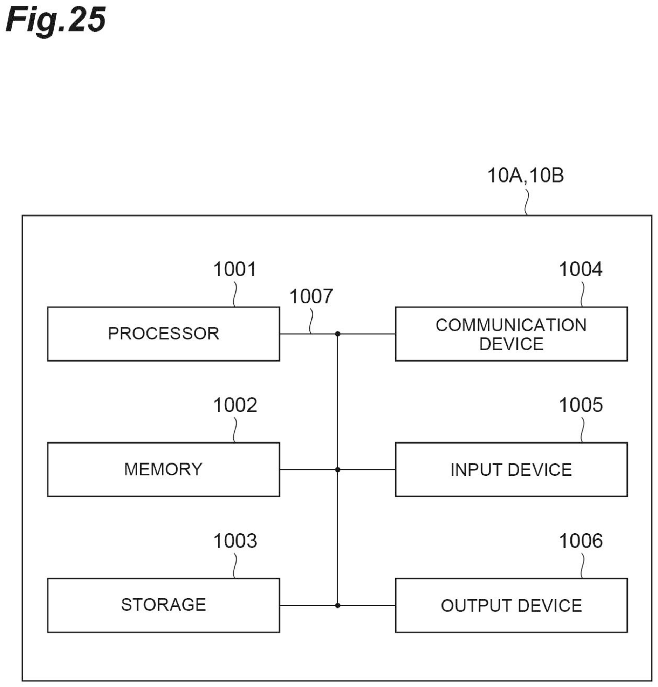

(Explanation of terms, description of hardware configuration (FIG. 25), etc.)

In the block diagrams with reference to which the embodiment has been described, blocks of functional units are illustrated. Such functional blocks (component units) are realized by an arbitrary combination of at least one of hardware and software. In addition, a method for realizing each functional block is not particularly limited. In other words, each functional block may be realized by using one device that is combined physically or logically or using a plurality of devices by directly or indirectly (for example, using a wire or wirelessly) connecting two or more devices separated physically or logically. A functional block may be realized by one device or a plurality of devices described above and software in combination.

The functions include determining, deciding, determination, calculating, computing, processing, deriving, investigating, searching, ascertaining, receiving, transmitting, outputting, accessing, resolving, selecting, choosing, establishing, comparing, supposing, expecting, considering, broadcasting, notifying, communicating, forwarding, configuring, reconfiguring, allocating or mapping, and assigning, but are not limited thereto. For example, a functional block (component) that causes transmission to function is called a transmitting unit or transmitter. In either case, as described above, implementation methods are not particularly limited.

For example, the information processing device according to an embodiment of the present disclosure may function as a computer that performs processing of the present disclosure. FIG. 25 is a diagram illustrating an example of a hardware configuration of the information processing device 10A according to the embodiment of the present disclosure. The above-described information processing device 10A may be physically configured as a computer device including a processor 1001, a memory 1002, a storage 1003, a communication device 1004, an input device 1005, an output device 1006, a bus 1007, and the like. Furthermore, the information processing device 10B may be configured in a similar way.

In addition, in the following description, the term "device" may be rephrased as a circuit, a device, a unit, or the like. The hardware configuration of the information processing device 10A may be configured to include one or more of respective devices shown in FIG. 25, or may be configured not to include some of the devices.

Each function in the information processing device 10A is realized by loading predetermined software (a program) into hardware such as the processor 1001 and the memory 1002 so that the processor 1001 performs calculation to control communication that is performed by the communication device 1004 and/or control at least one of reading and writing of data in the memory 1002 and the storage 1003.

The processor 1001, for example, controls the entire computer by executing an operating system. The processor 1001 may be configured as a central processing unit (CPU) including an interface with peripherals, a controller, an arithmetic operation unit, and a register.

The processor 1001 reads a program (a program code), a software module, data, or the like from the storage 1003 and/or the communication device 1004 into the memory 1002 and performs various processes in accordance therewith. As the program, a program that causes a computer to perform at least some of the operations described above in the embodiment is used. The various processes described above are described as being performed by a single processor 1001, but they may be simultaneously or sequentially performed by two or more processors 1001. The processor 1001 may be implemented as one or more chips. The program may be transmitted from a network via an telecommunication line.

The memory 1002 is a computer-readable recording medium and may be constituted by, for example, at least one of a read only memory (ROM), an erasable programmable ROM (EPROM), an electrically erasable programmable ROM (EEPROM), and a random access memory (RAM). The memory 1002 may be referred to as a register, a cache, a main memory (main storage device), or the like. The memory 1002 can store an executable program (program code), a software module, or the like that can be executed to perform a wireless communication method according to an embodiment of the present disclosure.

The storage 1003 is a computer-readable recording medium and may be configured by, for example, at least one of an optical disc such as a compact disc ROM (CD-ROM), a hard disk drive, a flexible disk, a magneto-optical disc (for example, a compact disc, a digital versatile disc, or a Blu-ray (registered trademark) disc), a smart card, a flash memory (for example, a card, a stick, or a key drive), a floppy (registered trademark) disk, and a magnetic strip. The storage 1003 may be referred to as an auxiliary storage device. The storage medium described above, for example, may be a database including at least one of the memory 1002 and the storage 1003, a server, or any other appropriate medium.

The communication device 1004 is hardware (a transmitting and receiving device) that performs communication between computers via a wired or wireless network and is also referred to as, for example, a network device, a network controller, a network card, or a communication module. The communication device 1004, for example, in order to realize at least one of frequency division duplex (FDD) and time division duplex (TDD), may be configured to include a high frequency switch, a duplexer, a filter, a frequency synthesizer, and the like.

The input device 1005 is an input device (for example, a keyboard, a mouse, a microphone, a switch, a button, a sensor, or the like) that accepts an input from the outside. The output device 1006 is an output device (for example, a display, a speaker, an LED lamp, or the like) that performs output to the outside. In addition, the input device 1005 and the output device 1006 may have an integrated configuration (for example, a touch panel).

The devices such as the processor 1001 and the memory 1002 are connected to each other via the bus 1007 for communication of information. The bus 1007 may be configured using a single bus, or may be configured using different buses for each device.

In addition, the information processing device 10A may be configured to include hardware such as a microprocessor, a digital signal processor (DSP), an application specific integrated circuit (ASIC), a programmable logic device (PLD), a field programmable gate array (FPGA), or the like, and a part or the whole of each functional block may be realized by the hardware. For example, the processor 1001 may be implemented using at least one of these types of hardware.

Notification of information is not limited to an aspect/embodiment described in the present disclosure and may be performed using a different method. For example, the notification of information may be performed using physical layer signaling (for example, downlink control information (DCI), uplink control information (UCI)), upper layer signaling (for example, radio resource control (RRC) signaling, medium access control (MAC) signaling, a master information block (MIB), a system information block (SIB)), any other signal, or a combination thereof. In addition, the RRC signaling may be referred to as an RRC message and, for example, may be an RRC connection setup message, an RRC connection reconfiguration message, or the like.

Each aspect or embodiment described in the present disclosure may be applied to at least one of the following systems: Long Term Evolution (LTE), LTE-Advanced (LTE-A), SUPER 3G, IMT-Advanced, Fourth Generation Mobile Communication System (4G), Fifth Generation Mobile Communication System (5G), Sixth Generation Mobile Communication System (6G), xth Generation Mobile Communication System (xG, where x is, for example, an integer or a decimal), Future Radio Access (FRA), New Radio (NR), New Radio Access (NX), Future Generation Radio Access (FX), Wideband Code Division Multiple Access (W-CDMA, registered trademark), Global System for Mobile Communications (GSM, registered trademark), CDMA2000, Ultra Mobile Broadband (UMB), IEEE 802.11 (Wi-Fi, registered trademark), IEEE 802.16 (WiMAX, registered trademark), IEEE 802.20, Ultra-WideBand (UWB), Bluetooth (registered trademark), systems that use other suitable systems, and at least one next-generation system that has been extended, modified, created, or defined based on any of the above systems. In addition, a plurality of systems may be combined (for example, a combination of at least one of LTE and LTE-A and 5G or the like) for an application.

The order of processes, the sequences, the flowcharts, and the like of the aspects/embodiments described above in the present disclosure may be changed unless conflicts arise. For example, in the methods described in the present disclosure, various steps are described as elements of an exemplified order, but the methods are not limited to the described order.

Information or the like which is input or output may be stored in a specific place (for example, a memory) or may be managed using a management table. Information or the like which is input or output may be overwritten, updated, or appended. The output information and the like may be deleted. The input information and the like may be transmitted to another device.

Determination may be performed using a value (0 or 1) which is expressed by one bit, may be performed using a Boolean value (true or false), or may be performed by comparison of numerical values (for example, comparison thereof with a predetermined value).

The aspects/embodiments described in this disclosure may be used alone, may be used in combination, or may be alternated during implementation thereof. In addition, a notification of predetermined information (for example, a notification of being X) is not limited to be performed explicitly and may be performed implicitly (for example, a notification of the predetermined information is not performed).

As above, while the present disclosure has been described in detail, it is apparent to a person skilled in the art that the present disclosure is not limited to the embodiments described in the present disclosure. The present disclosure may be modified or altered without departing from the spirit and scope of the present disclosure as defined by the claims. Thus, the description presented in the present disclosure is for the purpose of exemplary description and does not have any limiting meaning for the present disclosure.

It is apparent that software, regardless whether it is called software, firmware, middleware, a microcode, a hardware description language, or any other name, should be widely interpreted to mean a command, a command set, a code, a code segment, a program code, a program, a subprogram, a software module, an application, a software application, a software package, a routine, a subroutine, an object, an executable file, an execution thread, a procedure, a function, and the like.

In addition, software, a command, information, and the like may be transmitted and received through a transmission medium. For example, when software is transmitted from a website, a server, or another remote source using at least one of wired technology (such as a coaxial cable, an optical fiber cable, a twisted-pair wire, or a digital subscriber line (DSL)) and wireless technology (such as infrared rays or microwaves), at least one of the wired technology and the wireless technology are included in the definition of a transmission medium.

Information, a signal, and the like described in the present disclosure may be represented using any of various different technologies. For example, data, an instruction, a command, information, a signal, a bit, a symbol, a chip, and the like described over the entire description presented above may be represented using a voltage, a current, radio waves, a magnetic field or magnetic particles, an optical field or photons, or an arbitrary combination thereof.

In addition, a term described in the present disclosure and a term that is necessary for understanding the present disclosure may be substituted with a term having the same meaning or a meaning similar thereto. For example, at least one of a channel and a symbol may be a signal (signaling). For example, a signal may be a message. In addition, a component carrier (CC) may be referred to as a carrier frequency, a cell, a frequency carrier, or the like.

The terms "system" and "network" used in the present disclosure are used interchangeably.

In addition, information, parameters, and the like described in the present disclosure may be expressed using absolute values, may be expressed using values relative to a predetermined value, or may be expressed using other corresponding information. For example, radio resources may be directed using indices.

A name used for each parameter described above is not limited in any aspect. In addition, numerical equations using such parameters may be different from those that are explicitly disclosed in the present disclosure. Various channels (for example, PUCCH, PDCCH, and the like) and information elements can be identified using any suitable names, and various names assigned to such various channels and information elements are not limited in any aspect.

Terms such as "determining" used in the present disclosure may include a variety of operations of various types. The "determining", for example, may include a case in which judging, calculating, computing, processing, deriving, investigating, looking up, search, and inquiry (for example, looking up a table, a database, or any other data structure), or ascertaining is regarded as "determining." In addition, "determining" may include a case in which receiving (for example, receiving information), transmitting (for example, transmitting information), input, output, or accessing (for example, accessing data in a memory) is regarded as "determining." Furthermore, "determining" may include a case in which resolving, selecting, choosing, establishing, comparing, or the like is regarded as "determining." In other words, "determining" includes a case in which a certain operation is regarded as "determining." In addition, "determining" may be rephrased with "assuming", "expecting", "considering", and the like.

The expression "based on" used in the present disclosure does not mean "based on only" unless otherwise described. In other words, the expression "on the basis of" means both "only on the basis of" and "at least on the basis of."

Any reference to elements, for which names of "first", "second", and the like are used, used in the present disclosure does not generally limit the amount or the sequence of such elements. The terms can be conveniently used to distinguish two or more elements in the present disclosure. Accordingly, referring to the first and second elements does not mean that only the two elements are employed there or the first element precedes the second element in a certain form.

When the terms "include" and "including" and modifications thereof are used in the present disclosure, the terms are intended to have a comprehensive meaning similar to the term "comprising." The term "or" used in the present disclosure is not intended to mean an exclusive OR.

In the present disclosure, for example, when an article such as a, an, or the in English is added in translation, the present disclosure may include a case in which a noun subsequent to the article is of a plural type.

In the present disclosure, a term "A and B are different" may mean that "A and B are respectively different from each other." The expression may mean that "A and B are different from C." Expressions such as "separate" and "couple" may be construed in the same way as "different."

**Reference Signs List**

1: information system, 10a, 10b: information processing device, 11: data input unit, 12: preliminary execution data generation unit, 12a: data processing unit, 12b: anonymization processing unit, 12c: id irreversible conversion unit, 12d: encryption unit, 12e: data transmission/reception unit, 13: basic value calculation unit, 13a: data matching unit, 13b: aggregate processing unit, 13c: disclosure limitation processing unit, 13d: calculation unit, 14a: basic aggregation information acquisition unit, 14b: basic aggregation information provision unit, 15: estimation unit, 16: evaluation unit, 17: allocation determination unit, 18: aggregation method selection unit, 1001: processor, 1002: memory, 1003: storage, 1004: communication device, 1005: input device, 1006: output device, 1007: bus.

**Claims**

**1.** An information processing device comprising:

a basic aggregation information acquisition unit that acquires basic aggregation information of both the information processing device itself and a counterpart device, each holding user data including a user ID and attribute information related to a user;

an estimation unit that estimates sample size of an aggregation result based on the basic aggregation information of the information processing device itself and the counterpart device acquired by the basic aggregation information acquisition unit, and a basic value used for estimating the sample size of the aggregation result;

an evaluation unit that quantitatively evaluates influence of noise for each combination included in an aggregation pattern containing multiple combinations of data items included in the attribute information, based on the sample size of the aggregation result estimated by the estimation unit; and

an allocation determination unit that determines an allocation of a privacy budget for noise for each combination for aggregation targeting the aggregation pattern, within a predetermined range of the privacy budget, based on evaluation results for each combination obtained by the evaluation unit.

2.  The information processing device according to claim 1, further comprising a basic value calculation unit that calculates the basic value from the user data of the information processing device itself and encrypted user data of the counterpart device, wherein the estimation unit uses the basic value calculated by the basic value calculation unit as the basic value for estimating the sample size of the aggregation result.

3.  The information processing device according to claim 1, wherein the estimation unit uses a known basic value or a basic value obtained in advance by estimation as the basic value for estimating the sample size of the aggregation result.

4.  The information processing device according to claim 1, wherein the evaluation unit uses a predetermined index related to data accuracy of the estimated aggregation result as an evaluation index for influence of noise, and quantitatively evaluates the influence of noise for each combination included in the aggregation pattern.

5.  The information processing device according to claim 1, wherein the allocation determination unit determines the allocation of the privacy budget for each combination based on weighting for each combination by a function dependent on magnitude of the influence of noise for each combination.

6.  The information processing device according to claim 1, wherein the allocation determination unit determines the allocation of the privacy budget for each combination based on a required level of accuracy for suppressing the influence of noise for each combination.

7.  The information processing device according to claim 1, wherein the allocation determination unit determines the allocation of the privacy budget for each combination based on weighting for each combination by a function dependent on magnitude of the influence of noise for each combination, under a condition that a required level of accuracy for suppressing the influence of noise for each combination is satisfied.

8.  The information processing device according to claim 1, further comprising an aggregation method selection unit that, for each of multiple aggregation methods that can be adopted when performing aggregation targeting the aggregation pattern, lets the basic aggregation information acquisition unit acquire the basic aggregation information, lets the estimation unit estimate the sample size of the aggregation result, lets the evaluation unit evaluate the influence of noise for each combination, lets the allocation determination unit determine the allocation of the privacy budget for each combination, and selects an aggregation method suitable for a predetermined purpose based on comparison results of all aggregation methods.

9.  An information system comprising:

a first device comprising:

a basic aggregation information acquisition unit that acquires basic aggregation information of both the first device and a second device, each holding user data including a user ID and attribute information related to a user;

an estimation unit that estimates sample size of an aggregation result based on the basic aggregation information of the first device and the second device acquired by the basic aggregation information acquisition unit, and a basic value used for estimating the sample size of the aggregation result;

an evaluation unit that quantitatively evaluates influence of noise for each combination included in an aggregation pattern containing multiple combinations of data items included in the attribute information, based on the sample size of the aggregation result estimated by the estimation unit; and

an allocation determination unit that determines an allocation of a privacy budget for noise for each combination for aggregation targeting the aggregation pattern, within a predetermined range of the privacy budget, based on evaluation results for each combination obtained by the evaluation unit, and

the second device that provides the basic aggregation information acquisition unit with the basic aggregation information of the user data of the second device.

10. An information processing method comprising:

a step in which an information processing device acquires basic aggregation information of both the information processing device itself and a counterpart device, each holding user data including a user ID and attribute information related to a user;
a step in which the information processing device estimates sample size of an aggregation result based on the acquired basic aggregation information of the information processing device itself and the counterpart device, and a basic value used for estimating the sample size of the aggregation result;
a step in which the information processing device quantitatively evaluates influence of noise for each combination included in an aggregation pattern containing multiple combinations of data items included in the attribute information, based on the estimated sample size of the aggregation result; and
a step in which the information processing device determines an allocation of a privacy budget for noise for each combination for aggregation targeting the aggregation pattern, within a predetermined range of the privacy budget, based on evaluation results for each combination obtained by the evaluation.

Fig.1

DEVICE OF COMPANY B — 10B

DATA INPUT UNIT — 11

PRELIMINARY EXECUTION DATA GENERATION UNIT — 12
- DATA PROCESSING UNIT — 12A
- ANONYMIZATION PROCESSING UNIT — 12B
- ID IRREVERSIBLE CONVERSION UNIT — 12C
- ENCRYPTION UNIT — 12D
- DATA TRANSMISSION/RECEPTION UNIT — 12E

BASIC AGGREGATION INFORMATION PROVISION UNIT — 14B

DEVICE OF COMPANY A — 10A

DATA INPUT UNIT — 11

PRELIMINARY EXECUTION DATA GENERATION UNIT — 12
- DATA PROCESSING UNIT — 12A
- ANONYMIZATION PROCESSING UNIT — 12B
- ID IRREVERSIBLE CONVERSION UNIT — 12C
- ENCRYPTION UNIT — 12D
- DATA TRANSMISSION/RECEPTION UNIT — 12E

BASIC VALUE CALCULATION UNIT — 13
- DATA MATCHING UNIT — 13A
- AGGREGATE PROCESSING UNIT — 13B
- DISCLOSURE LIMITATION PROCESSING UNIT — 13C
- CALCULATION UNIT — 13D

BASIC AGGREGATION INFORMATION ACQUISITION UNIT — 14A

ESTIMATION UNIT — 15
EVALUATION UNIT — 16
ALLOCATION DETERMINATION UNIT — 17

1

# Fig.2

DEVICE OF COMPANY A

DATA INPUT ～S1

PRELIMINARY EXECUTION DATA GENERATION

DATA PROCESSING ～S3A

ANONYMIZATION PROCESSING ～S3B

ID IRREVERSIBLE CONVERSION ～S3C

ID ENCRYPTION ～S3D

TRANSMISSION/RECEPTION OF ENCRYPTED ID ～S3E

ID RE-ENCRYPTION ～S3F

RECEPTION OF ENCRYPTED ID ～S3G

S3

DATA MATCHING ～S5

AGGREGATION PROCESSING ～S6

DISCLOSURE LIMITATION PROCESSING ～S7

CALCULATION OF BASIC VALUES ～S8

EXECUTION OF BASIC AGGREGATION

S9

ACQUISITION OF BASIC AGGREGATION INFORMATION ～S11

ESTIMATION OF AGGREGATION RESULTS ～S12

EVALUATION OF INFLUENCE OF NOISE ～S13

DETERMINATION OF PRIVACY BUDGET ALLOCATION ～S14

DEVICE OF COMPANY B

S2～ DATA INPUT

PRELIMINARY EXECUTION DATA GENERATION

DATA PROCESSING ～S4A

ANONYMIZATION PROCESSING ～S4B

ID IRREVERSIBLE CONVERSION ～S4C

ID ENCRYPTION ～S4D

ENCRYPTION OF ATTRIBUTE INFORMATION ～S4E

TRANSMISSION/RECEPTION OF ENCRYPTED ID ～S4F

ID RE-ENCRYPTION ～S4G

TRANSMISSION OF ENCRYPTED ID ～S4H

S4

EXECUTION OF BASIC AGGREGATION

S10

EP 4 697 219 A1

# Fig.3

<DATA OF COMPANY A>
- •USER ID
- •ITEM A：{MALE, FEMALE}
- •ITEM B：{20S, 30S, 40S, 50S, 60S, 70S, 80S}

<DATA OF COMPANY B>
- •USER ID
- •ITEM C：{INSIDE TOKYO, OUTSIDE TOKYO}
- •ITEM D：{PURCHASED, NOT PURCHASED}

AGGREGATION PATTERN={ITEM A × D, ITEM B × D, ITEM B × C × D}

| ITEM A | ITEM D | AGGREGATION RESULT |
|---|---|---|
| MALE | PURCHASED | |
| MALE | NOT PURCHASED | |
| FEMALE | PURCHASED | |
| FEMALE | NOT PURCHASED | |

AGGREGATION（1）

| ITEM B | ITEM D | AGGREGATION RESULT |
|---|---|---|
| 20S | PURCHASED | |
| 20S | NOT PURCHASED | |
| ⋮ | ⋮ | |
| 80S | PURCHASED | |
| 80S | NOT PURCHASED | |

AGGREGATION（2）

| ITEM B | ITEM C | ITEM D | AGGREGATION RESULT |
|---|---|---|---|
| 20S | INSIDE TOKYO | PURCHASED | |
| 20S | INSIDE TOKYO | NOT PURCHASED | |
| ⋮ | ⋮ | ⋮ | |
| 80S | OUTSIDE TOKYO | PURCHASED | |
| 80S | OUTSIDE TOKYO | NOT PURCHASED | |

AGGREGATION（3）

EP 4 697 219 A1

# Fig.4

DATA INPUT(S1, S2)

PRELIMINARY EXECUTION DATA GENERATION(S3, S4)

DATA MATCHING(S5) AGGREGATION PROCESSING(S6)

DISCLOSURE LIMITATION PROCESSING(S7) CALCULATION OF BASIC VALUE(S8)

<DATA OF COMPANY A>

INPUT DATA OF STEP S1

| USER ID |
|---------|
| aaa |
| ddd |
| ggg |
| jjj |
| mmm |
| ⋮ |

×

DATA MATCHING RATE 40%

PURCHASE RATE IN MATCHED DATA 31%

| ITEM D | AGGREGATION RESULT |
|--------|--------------------|
| PURCHASED | 1884 |
| NOT PURCHASED | 4300 |

| ITEM D | AGGREGATION RESULT |
|--------|--------------------|
| PURCHASED | 1900 |
| NOT PURCHASED | 4229 |
| TOTAL | 6129 |

<DATA OF COMPANY B>

INPUT DATA OF STEP S2

| USER ID | ITEM D |
|---------|--------|
| aaa | PURCHASED |
| bbb | PURCHASED |
| ccc | PURCHASED |
| ddd | NOT PURCHASED |
| eee | PURCHASED |
| ⋮ | ⋮ |

+

NOISE ADDITION
(EXAMPLE: 0.1 IS CONSUMED FROM PRIVACY BUDGET ε_total=1)

※FOR ITEM D, ITEM-SPECIFIC RATIO (PURCHASE RATIO) CALCULATED BY BASIC AGGREGATION OF COMPANY B IS 31%, AND A DIFFERENCIAL FROM ITEM-SPECIFIC RATIO (PURCHASE RATIO) CALCULATED IN S8 IS ZERO.
→SO DATA BIAS "0%" IS CALCULATED AS THE BASIC VALUE

EP 4 697 219 A1

# Fig.5

## (BOTH COMPANY A AND COMPANY B) DATA PROCESSING

DATA OF COMPANY A

| USER ID | ITEM A | ITEM B |
|---------|--------|--------|
| aaa | MALE | 20S |
| ddd | MALE | 40S |
| ggg | FEMALE | 50S |
| jjj | FEMALE | 30S |
| mmm | MALE | 30S |
| ⋮ | ⋮ | ⋮ |

USER ID      ATTRIBUTE INFORMATION

DATA PROCESSING

| USER ID |
|---------|
| aaa |
| ddd |
| ggg |
| jjj |
| mmm |
| ⋮ |

DATA OF COMPANY B

| USER ID | ITEM C | ITEM D |
|---------|--------|--------|
| aaa | INSIDE TOKYO | PURCHASED |
| bbb | OUTSIDE TOKYO | PURCHASED |
| ccc | INSIDE TOKYO | PURCHASED |
| ddd | OUTSIDE TOKYO | NOT PURCHASED |
| eee | INSIDE TOKYO | PURCHASED |
| ⋮ | ⋮ | ⋮ |

USER ID      ATTRIBUTE INFORMATION

DATA PROCESSING

| USER ID | ITEM D |
|---------|--------|
| aaa | PURCHASED |
| bbb | PURCHASED |
| ccc | PURCHASED |
| ddd | NOT PURCHASED |
| eee | PURCHASED |
| ⋮ | ⋮ |

# Fig.6

(BOTH COMPANY A AND COMPANY B)
ID IRREVERSIBLE CONVERSION

DATA OF COMPANY A

| USER ID |
|---------|
| aaa |
| ddd |
| ggg |
| jjj |
| mmm |
| ⋮ |

DATA OF COMPANY B

| USER ID | ITEM D |
|---------|--------|
| aaa | PURCHASED |
| bbb | PURCHASED |
| ccc | PURCHASED |
| ddd | NOT PURCHASED |
| eee | PURCHASED |
| ⋮ | ⋮ |

ID IRREVERSIBLE CONVERSION

ID IRREVERSIBLE CONVERSION

| ANONYMIZED HASH |
|-----------------|
| afewf34g ⋯ |
| 33fdef5d ⋯ |
| cf2k1w52 ⋯ |
| ab6g9b36 ⋯ |
| fe741geb ⋯ |
| ⋮ |

| ANONYMIZED HASH | ITEM D |
|-----------------|--------|
| afewf34g ⋯ | PURCHASED |
| bf21fcb6 ⋯ | PURCHASED |
| hg42e9ah ⋯ | PURCHASED |
| 33fdef5d ⋯ | NOT PURCHASED |
| 4e1cc8a8 ⋯ | PURCHASED |
| ⋮ | ⋮ |

23

# Fig.7

(BOTH COMPANY A AND COMPANY B) ID ENCRYPTION

DATA OF COMPANY A

| ANONYMIZED HASH |
|---|
| afewf34g ··· |
| 33fdef5d ··· |
| cf2k1w52 ··· |
| ab6g9b36 ··· |
| fe741geb ··· |
| ⋮ |

DATA OF COMPANY B

| ANONYMIZED HASH | ITEM D |
|---|---|
| afewf34g ··· | PURCHASED |
| bf21fcb6 ··· | PURCHASED |
| hg42e9ah ··· | PURCHASED |
| 33fdef5d ··· | NOT PURCHASED |
| 4e1cc8a8 ··· | PURCHASED |
| ⋮ | ⋮ |

ID ENCRYPTION

ID ENCRYPTION

ID-ENCRYPTED DATA OF COMPANY A

| ENCRYPTED ID |
|---|
| 🔒ᵃ afewf34g ··· |
| 🔒ᵃ 33fdef5d ··· |
| 🔒ᵃ cf2k1w52 ··· |
| 🔒ᵃ ab6g9b36 ··· |
| 🔒ᵃ fe741geb ··· |
| ⋮ |

ID-ENCRYPTED DATA OF COMPANY B

| ENCRYPTED ID | ITEM D |
|---|---|
| 🔒ᵇ afewf34g ··· | PURCHASED |
| 🔒ᵇ bf21fcb6 ··· | PURCHASED |
| 🔒ᵇ hg42e9ah ··· | PURCHASED |
| 🔒ᵇ 33fdef5d ··· | NOT PURCHASED |
| 🔒ᵇ 4e1cc8a8 ··· | PURCHASED |
| ⋮ | ⋮ |

# Fig.8

(a)

<u>(IN DEVICE OF COMPANY B)</u>
<u>ENCRYPTION OF ATTRIBUTE INFORMATION</u>

ID-ENCRYPTED DATA OF
COMPANY B

| ENCRYPTED ID | ITEM D |
|---|---|
| 🔒$^b$ afewf34g ⋯ | PURCHASED |
| 🔒$^b$ bf21fcb6 ⋯ | PURCHASED |
| 🔒$^b$ hg42e9ah ⋯ | PURCHASED |
| 🔒$^b$ 33fdef5d ⋯ | NOT PURCHASED |
| 🔒$^b$ 4e1cc8a8 ⋯ | PURCHASED |
| ⋮ | ⋮ |

ENCRYPTION OF
ATTRIBUTE
INFORMATION →

ENCRYPTED USER DATA OF
COMPANY B

| ENCRYPTED ID | ITEM D |
|---|---|
| 🔒$^b$ afewf34g ⋯ | 🔒$^B$ PURCHASED |
| 🔒$^b$ bf21fcb6 ⋯ | 🔒$^B$ PURCHASED |
| 🔒$^b$ hg42e9ah ⋯ | 🔒$^B$ PURCHASED |
| 🔒$^b$ 33fdef5d ⋯ | 🔒$^B$ NOT PURCHASED |
| 🔒$^b$ 4e1cc8a8 ⋯ | 🔒$^B$ PURCHASED |
| ⋮ | ⋮ |

(b)

<u>(BOTH COMPANY A AND COMPANY B)</u>
<u>TRANSMISSION/RECEPTION OF ENCRYPTED ID</u>

ID-ENCRYPTED DATA OF
COMPANY A

| ENCRYPTED ID |
|---|
| 🔒$^a$ afewf34g ⋯ |
| 🔒$^a$ 33fdef5d ⋯ |
| 🔒$^a$ cf2k1w52 ⋯ |
| 🔒$^a$ ab6g9b36 ⋯ |
| 🔒$^a$ fe741geb ⋯ |
| ⋮ |

TRANSMIT TO
COMPANY B →

← TRANSMIT TO
COMPANY A

ENCRYPTED USER DATA OF
COMPANY B

| ENCRYPTED ID | ITEM D |
|---|---|
| 🔒$^b$ afewf34g ⋯ | 🔒$^B$ PURCHASED |
| 🔒$^b$ bf21fcb6 ⋯ | 🔒$^B$ PURCHASED |
| 🔒$^b$ hg42e9ah ⋯ | 🔒$^B$ PURCHASED |
| 🔒$^b$ 33fdef5d ⋯ | 🔒$^B$ NOT PURCHASED |
| 🔒$^b$ 4e1cc8a8 ⋯ | 🔒$^B$ PURCHASED |
| ⋮ | ⋮ |

# Fig.9

## (BOTH COMPANY A AND COMPANY B) RE-ENCRYPTION OF ID

ENCRYPTED ID OF COMPANY B

| ENCRYPTED ID |
|---|
| $\unlock^b$ afewf34g ⋯ |
| $\unlock^b$ bf21fcb6 ⋯ |
| $\unlock^b$ hg42e9ah ⋯ |
| $\unlock^b$ 33fdef5d ⋯ |
| $\unlock^b$ 4e1cc8a8 ⋯ |
| ⋮ |

ID-ENCRYPTED DATA OF COMPANY A

| ENCRYPTED ID |
|---|
| $\unlock^a$ afewf34g ⋯ |
| $\unlock^a$ 33fdef5d ⋯ |
| $\unlock^a$ cf2k1w52 ⋯ |
| $\unlock^a$ ab6g9b36 ⋯ |
| $\unlock^a$ fe741geb ⋯ |
| ⋮ |

ID ENCRYPTION

ID ENCRYPTION

ENCRYPTED ID OF COMPANY B

| ENCRYPTED ID |
|---|
| $\unlock^{ba}$ afewf34g ⋯ |
| $\unlock^{ba}$ bf21fcb6 ⋯ |
| $\unlock^{ba}$ hg42e9ah ⋯ |
| $\unlock^{ba}$ 33fdef5d ⋯ |
| $\unlock^{ba}$ 4e1cc8a8 ⋯ |
| ⋮ |

ENCRYPTED ID OF COMPANY A

| ENCRYPTED ID |
|---|
| $\unlock^{ab}$ afewf34g ⋯ |
| $\unlock^{ab}$ 33fdef5d ⋯ |
| $\unlock^{ab}$ cf2k1w52 ⋯ |
| $\unlock^{ab}$ ab6g9b36 ⋯ |
| $\unlock^{ab}$ fe741geb ⋯ |
| ⋮ |

※RE-ENCRYPTED "ENCRYPTED ID OF COMPANY A" IS TRANSMITTED FROM DEVICE OF COMPANY B TO DEVICE OF COMPANY A.

# *Fig.10*

(IN DEVICE OF COMPANY A) DATA MATCHING

## Fig.11

EXECUTION OF BASIC AGGREGATION（S9, S10）
ACQUISITION OF BASIC AGGREGATION
INFORMATION（S11）

ESTIMATION OF
AGGREGATION RESULT（S12）

SAMPLE SIZE $n_i$（ESTIMATED VALUE）
＝SAMPLE SIZE BY GENDER IN DATA OF COMPANY A
× PURCHASE RATE IN DATA OF COMPANY B ×
DATA MATCHING RATE

PURCHASE RATE IN COMPANY B'S DATA IS
APPROPRIATELY ADJUSTED BASED ON DIFFERENCE
（DATA BIAS）FROM PURCHASE RATE IN MATCHED
DATA.

AGGREGATION
(1)～(3)

＜DATA OF
COMPANY A＞

INPUT DATA OF
STEP S1

| ITEM A | SAMPLE SIZE |
|--------|-------------|
| MALE | 8306 |
| FEMALE | 4211 |

×

＜DATA OF
COMPANY B＞

INPUT DATA OF
STEP S2

AGGREGATION
(1)～(3)

| ITEM D | RATIO |
|--------|-------|
| PURCHASED | 31% |
| NOT PURCHASED | 69% |

AGGREGATION
(1)～(3)

| ITEM A | ITEM D | SAMPLE SIZE$n_i$ （ESTIMATED VALUE） |
|--------|--------|-------------------------------|
| MALE | PURCHASED | 1030 |
| MALE | NOT PURCHASED | 2292 |
| FEMALE | PURCHASED | 522 |
| FEMALE | NOT PURCHASED | 1162 |
| MEDIAN VALUE | | 1096 |

## Fig.12

EVALUATION OF INFLUENCE OF NOISE (S13)

| AGGREGA-TION | MEDIAN VALUE OF ESTIMATED SAMPLE SIZE $n=\text{Med}(n_i)$ | INFLUENCE OF NOISE z $V\left[\frac{n+z}{n}\right]=\frac{2}{(n\varepsilon)^2}$ |
|---|---|---|
| AGGREGA-TION (1) ITEM A×D | 1096 | $\frac{2}{(1096\varepsilon_1)^2}$ |
| AGGREGA-TION (2) ITEM B×D | 860 | $\frac{2}{(860\varepsilon_2)^2}$ |
| AGGREGA-TION (3) ITEM B×C×D | 541 | $\frac{2}{(541\varepsilon_3)^2}$ |

DETERMINATION OF PRIVACY BUDGET ALLOCATION (S14)

TOTAL $0.9=\varepsilon_{total}$

| AGGREGA-TION | MEDIAN VALUE OF ESTIMATED SAMPLE SIZE $n=\text{Med}(n_i)$ | BUDGET ALLOCA-TION $\varepsilon$ | INFLUENCE OF NOISE z $V\left[\frac{n+z}{n}\right]=\frac{2}{(n\varepsilon)^2}$ |
|---|---|---|---|
| AGGREGA-TION (1) ITEM A×D | 1096 | 0.209 | $3.801 \times 10^{-5}$ |
| AGGREGA-TION (2) ITEM B×D | 860 | 0.267 | $3.801 \times 10^{-5}$ |
| AGGREGA-TION (3) ITEM B×C×D | 541 | 0.424 | $3.801 \times 10^{-5}$ |

TO EQUALIZE INFLUENCE OF NOISE, ALLOCATE REMAINING PRIVACY BUDGET $\varepsilon_{total}=0.9$ INVERSELY PROPORTIONAL TO INFLUENCE OF NOISE

$$\varepsilon_1 : \varepsilon_2 : \varepsilon_3 = \frac{1}{1096} : \frac{1}{860} : \frac{1}{541}$$

INFLUENCE OF NOISE IN AGGREGATIONS (1) TO (3) PROVES TO BE EQUAL.

EP 4 697 219 A1

**Fig.13**

Fig.14

EP 4 697 219 A1

## Fig.15

EVALUATION OF INFLUENCE OF NOISE (S13)

| AGGREGA-TION | MEDIAN VALUE OF ESTIMATED SAMPLE SIZE $n = \mathrm{Med}(n_i)$ | INFLUENCE OF NOISE z $V\left[\frac{n+z}{n}\right] = \frac{2}{(n\varepsilon)^2}$ |
|---|---|---|
| AGGREGA-TION(1) ITEM A×D | 1096 | $\frac{2}{(1096\varepsilon_1)^2}$ |
| AGGREGA-TION(2) ITEM B×D | 860 | $\frac{2}{(860\varepsilon_2)^2}$ |
| AGGREGA-TION (3) ITEM B×C×D | 541 | $\frac{2}{(541\varepsilon_3)^2}$ |

DETERMINATION OF PRIVACY BUDGET ALLOCATION (S14)

TOTAL $1.0 = \varepsilon_{total}$

| AGGREGA-TION | MEDIAN VALUE OF ESTIMATED SAMPLE SIZE $n = \mathrm{Med}(n_i)$ | BUDGET ALLOCA-TION $\varepsilon$ | INFLUENCE OF NOISE z $V\left[\frac{n+z}{n}\right] = \frac{2}{(n\varepsilon)^2}$ |
|---|---|---|---|
| AGGREGA-TION(1) ITEM A×D | 1096 | 0.233 | $3.079 \times 10^{-5}$ |
| AGGREGA-TION(2) ITEM B×D | 860 | 0.296 | $3.079 \times 10^{-5}$ |
| AGGREGA-TION (3) ITEM B×C×D | 541 | 0.471 | $3.079 \times 10^{-5}$ |

TO EQUALIZE INFLUENCE OF NOISE, ALLOCATE REMAINING PRIVACY BUDGET $\varepsilon_{total}=1.0$ INVERSELY PROPORTIONAL TO INFLUENCE OF NOISE

$$\varepsilon_1 : \varepsilon_2 : \varepsilon_3 = \frac{1}{1096} : \frac{1}{860} : \frac{1}{541}$$

INFLUENCE OF NOISE IN AGGREGATIONS (1) TO (3) PROVES TO BE EQUAL.

EP 4 697 219 A1

**Fig.16**

EVALUATION OF INFLUENCE OF NOISE (S13)

| AGGREGA-TION | MEDIAN VALUE OF ESTIMATED SAMPLE SIZE $n=\mathrm{Med}(n_i)$ | INFLUENCE OF NOISE z $V[\frac{n+z}{n}]=\frac{2}{(n\varepsilon)^2}$ |
|---|---|---|
| AGGREGA-TION(1) ITEM A×D | 1096 | $\frac{2}{(1096\varepsilon_1)^2}$ |
| AGGREGA-TION(2) ITEM B×D | 860 | $\frac{2}{(860\varepsilon_2)^2}$ |
| AGGREGA-TION (3) ITEM B×C×D | 541 | $\frac{2}{(541\varepsilon_3)^2}$ |

DETERMINATION OF PRIVACY BUDGET ALLOCATION (S14)

TOTAL $0.785 < \varepsilon_{total}=1.0$

| AGGREGA-TION | MEDIAN VALUE OF ESTIMATED SAMPLE SIZE $n=\mathrm{Med}(n_i)$ | BUDGET ALLOCA-TION $\varepsilon$ | INFLUENCE OF NOISE z $V[\frac{n+z}{n}]=\frac{2}{(n\varepsilon)^2}$ |
|---|---|---|---|
| AGGREGA-TION(1) ITEM A×D | 1096 | 0.182 | $5.000 \times 10^{-5}$ |
| AGGREGA-TION(2) ITEM B×D | 860 | 0.233 | $5.000 \times 10^{-5}$ |
| AGGREGA-TION (3) ITEM B×C×D | 541 | 0.370 | $5.000 \times 10^{-5}$ |

ALLOCATION OF PRIVACY BUDGET IS DETERMINED SO THAT INFLUENCE OF NOISE FOR EACH COMBINATION SATISFIES REQUIRED LEVEL

INFLUENCE OF NOISE FOR EACH COMBINATION SATISFIES REQUIRED LEVEL $(5.000 \times 10^{-5})$

# Fig.17

WHEN THE PRESENT INVENTION IS <u>NOT USED</u>

INFLUENCE OF NOISE IS LARGE

| AGGREGA-TION | MEDIAN VALUE OF ESTIMATED SAMPLE SIZE $n=\mathrm{Med}(n_i)$ | BUDGET ALLOCA-TION $\varepsilon$ | INFLUENCE OF NOISE z $V[\frac{n+z}{n}]=\frac{2}{(n\varepsilon)^2}$ |
|---|---|---|---|
| GGREGA-TION(1) ITEM A×D | 1096 | 0.333 | $1.498 \times 10^{-5}$ |
| GGREGA-TION(2) ITEM B×D | 860 | 0.333 | $2.434 \times 10^{-5}$ |
| AGGREGA-TION (3) ITEM B×C×D | 541 | 0.333 | $6.150 \times 10^{-5}$ |

ALLOCATE PRIVACY BUDGET EVENLY BECAUSE AGGREGATION RESULT IS UNKNOWN

WHEN THE PRESENT INVENTION IS <u>USED</u>

EFFECT IN BUDGET ALLOCATION OF FIG. 15

INFLUENCE OF NOISE IS EQUAL

| AGGREGA-TION | MEDIAN VALUE OF ESTIMATED SAMPLE SIZE $n=\mathrm{Med}(n_i)$ | BUDGET ALLOCA-TION $\varepsilon$ | INFLUENCE OF NOISE z $V[\frac{n+z}{n}]=\frac{2}{(n\varepsilon)^2}$ |
|---|---|---|---|
| GGREGA-TION(1) ITEM A×D | 1096 | 0.233 | $3.079 \times 10^{-5}$ |
| GGREGA-TION(2) ITEM B×D | 860 | 0.296 | $3.079 \times 10^{-5}$ |
| AGGREGA-TION (3) ITEM B×C×D | 541 | 0.471 | $3.079 \times 10^{-5}$ |

EFFECT IN BUDGET ALLOCATION OF FIG. 16

REQUIRED LEVEL IS ACHIEVED

| AGGREGA-TION | MEDIAN VALUE OF ESTIMATED SAMPLE SIZE $n=\mathrm{Med}(n_i)$ | BUDGET ALLOCA-TION $\varepsilon$ | INFLUENCE OF NOISE z $V[\frac{n+z}{n}]=\frac{2}{(n\varepsilon)^2}$ |
|---|---|---|---|
| GGREGA-TION(1) ITEM A×D | 1096 | 0.182 | $5.000 \times 10^{-5}$ |
| GGREGA-TION(2) ITEM B×D | 860 | 0.233 | $5.000 \times 10^{-5}$ |
| AGGREGA-TION (3) ITEM B×C×D | 541 | 0.370 | $5.000 \times 10^{-5}$ |

EP 4 697 219 A1

**Fig.18**

EP 4 697 219 A1

**Fig.19**

DEVICE OF COMPANY A

S1 — DATA INPUT

S1X — IDENTIFICATION OF POSSIBLE AGGREGATION METHODS

START LOOP

S9 — EXECUTION OF BASIC AGGREGATION

S11 — ACQUISITION OF BASIC AGGREGATION INFORMATION

S12 — ESTIMATION OF AGGREGATION RESULT

S13 — EVALUATION OF INFLUENCE OF NOISE

S14 — DETERMINATION OF PRIVACY BUDGET ALLOCATION

END LOOP

S15 — COMPARISON OF EVALUATION OF INFLUENCE OF NOISE FOR EACH AGGREGATION METHOD AND SELECTION OF OPTIMAL AGGREGATION METHOD

DEVICE OF COMPANY B

DATA INPUT — S2

START LOOP

EXECUTION OF BASIC AGGREGATION — S10

EP 4 697 219 A1

# Fig.20

AGGREGATION METHOD(a):
EXECUTE EACH AGGREGATION INDEPENDENTLY

| USER IDENTIFIER | ITEM A | ITEM B |
|---|---|---|
| aaa | FEMALE | 20S |
| ddd | MALE | 40S |
| ggg | FEMALE | 40S |
| jjj | FEMALE | 60S |
| mmm | MALE | 20S |
| ppp | MALE | 70S |
| sss | FEMALE | 30S |
| vvv | FEMALE | 30S |
| ⋮ | ⋮ | ⋮ |

×

| USER IDENTIFIER | ITEM C | ITEM D |
|---|---|---|
| aaa | INSIDE TOKYO | PURCHASED |
| bbb | INSIDE TOKYO | PURCHASED |
| ccc | OUTSIDE TOKYO | PURCHASED |
| ddd | OUTSIDE TOKYO | NOT PURCHASED |
| eee | INSIDE TOKYO | PURCHASED |
| fff | OUTSIDE TOKYO | PURCHASED |
| ggg | INSIDE TOKYO | NOT PURCHASED |
| hhh | OUTSIDE TOKYO | NOT PURCHASED |
| ⋮ | ⋮ | ⋮ |

AGGREGATION(1)

| ITEM A | ITEM D | AGGREGATION RESULT |
|---|---|---|
| MALE | PURCHASED | |
| MALE | NOT PURCHASED | |
| FEMALE | PURCHASED | |
| FEMALE | NOT PURCHASED | |

+ NOISE ADDITION

AGGREGATION(2)

| ITEM B | ITEM D | AGGREGATION RESULT |
|---|---|---|
| 20S | PURCHASED | |
| 20S | NOT PURCHASED | |
| ⋮ | ⋮ | |
| 80S | PURCHASED | |
| 80S | NOT PURCHASED | |

+ NOISE ADDITION

AGGREGATION(3)

| ITEM B | ITEM C | ITEM D | AGGREGATION RESULT |
|---|---|---|---|
| 20S | INSIDE TOKYO | PURCHASED | |
| 20S | INSIDE TOKYO | NOT PURCHASED | |
| ⋮ | ⋮ | ⋮ | |
| 80S | OUTSIDE TOKYO | PURCHASED | |
| 80S | OUTSIDE TOKYO | NOT PURCHASED | |

+ NOISE ADDITION

## Fig.21

AGGREGATION METHOD(b):
EXECUTE MULTIPLE AGGREGATIONS TOGETHER

RESULT AFTER EXECUTING MULTIPLE
AGGREGATIONS TOGETHER

| ITEM A | ITEM B | ITEM C | ITEM D | AGGREGATION RESULT |
|---|---|---|---|---|
| MALE | 20S | INSIDE TOKYO | PURCHASED | (1) |
| MALE | 20S | INSIDE TOKYO | NOT PURCHASED | (2) |
| MALE | 20S | OUTSIDE TOKYO | PURCHASED | (3) |
| MALE | 20S | OUTSIDE TOKYO | NOT PURCHASED | (4) |
| ⋮ | ⋮ | ⋮ | ⋮ | ⋮ |
| MALE | 80S | INSIDE TOKYO | PURCHASED | (25) |
| MALE | 80S | INSIDE TOKYO | NOT PURCHASED | (26) |
| MALE | 80S | OUTSIDE TOKYO | PURCHASED | (27) |
| MALE | 80S | OUTSIDE TOKYO | NOT PURCHASED | (28) |
| FEMALE | 20S | INSIDE TOKYO | PURCHASED | (29) |
| FEMALE | 20S | INSIDE TOKYO | NOT PURCHASED | (30) |
| FEMALE | 20S | OUTSIDE TOKYO | PURCHASED | (31) |
| FEMALE | 20S | OUTSIDE TOKYO | NOT PURCHASED | (32) |
| ⋮ | ⋮ | ⋮ | ⋮ | ⋮ |
| FEMALE | 80S | INSIDE TOKYO | PURCHASED | (53) |
| FEMALE | 80S | INSIDE TOKYO | NOT PURCHASED | (54) |
| FEMALE | 80S | OUTSIDE TOKYO | PURCHASED | (55) |
| FEMALE | 80S | OUTSIDE TOKYO | NOT PURCHASED | (56) |

**+ NOISE ADDITION**

AGGREGATION(1) STATISTICAL INFORMATION IS GENERATED FOR (ITEM A × D)

| ITEM A | ITEM D | AGGREGATION RESULT |
|---|---|---|
| MALE | PURCHASED | (1)+(3)+ ⋯ +(27) |
| MALE | NOT PURCHASED | (2)+(4)+ ⋯ +(28) |
| FEMALE | PURCHASED | (29)+(31)+ ⋯ +(55) |
| FEMALE | NOT PURCHASED | (30)+(32)+ ⋯ +(56) |

**+** NOISE IS SUPERIMPOSED 14 TIMES
(ITEM B) 7 × (ITEM C) 2

AGGREGATION(2) STATISTICAL INFORMATION IS GENERATED FOR (ITEM B × D)

| ITEM B | ITEM D | AGGREGATION RESULT |
|---|---|---|
| 20S | PURCHASED | (1)+(3)+(29)+(31) |
| 20S | NOT PURCHASED | (2)+(4)+(30)+(32) |
| ⋮ | ⋮ | ⋮ |
| 80S | PURCHASED | (25)+(27)+(53)+(55) |
| 80S | NOT PURCHASED | (26)+(28)+(54)+(56) |

**+** NOISE IS SUPERIMPOSED 4 TIMES
(ITEM A) 2 × (ITEM C) 2

AGGREGATION(3) STATISTICAL INFORMATION IS GENERATED FOR (ITEM B × C × D)

| ITEM B | ITEM C | ITEM D | AGGREGATION RESULT |
|---|---|---|---|
| 20S | INSIDE TOKYO | PURCHASED | (1)+(29) |
| 20S | INSIDE TOKYO | NOT PURCHASED | (2)+(30) |
| ⋮ | ⋮ | ⋮ | ⋮ |
| 80S | OUTSIDE TOKYO | PURCHASED | (27)+(55) |
| 80S | OUTSIDE TOKYO | NOT PURCHASED | (28)+(56) |

**+** NOISE IS SUPERIMPOSED 2 TIMES
(ITEM A) 2

# Fig.22

AGGREGATION METHOD（a）EXECUTE EACH AGGREGATION INDEPENDENTLY
PRIVACY BUDGET IS SET TO 1.0 AND ALLOCATED

| AGGREGA-TION | MEDIAN VALUE OF ESTIMATED SAMPLE SIZE $n=Med(n_i)$ | BUDGET ALLOCA-TION $\varepsilon$ | NUMBER OF SUPERIMPOSITION OF NOISE $x$ | INFLUENCE OF NOISE $z$ $V[\frac{n+z}{n}]=\frac{2x}{(n\varepsilon)^2}$ |
|---|---|---|---|---|
| AGGREGA-TION(1) ITEM A×D | 1096 | 0.233 | 1 | $3.079 \times 10^{-5}$ |
| AGGREGA-TION(2) ITEM B×D | 860 | 0.296 | 1 | $3.079 \times 10^{-5}$ |
| AGGREGA-TION(3) ITEM B×C×D | 541 | 0.471 | 1 | $3.079 \times 10^{-5}$ |

NOISE IS NOT SUPERIMPOSED, BUT PRIVACY BUDGET FOR EACH AGGREGATION IS SMALLER (NOISE INTENSITY IS HIGHER)

AGGREGATION METHOD（b）EXECUTE MULTIPLE AGGREGATIONS TOGETHER
PRIVACY BUDGET IS SET TO 1.0 AND ALLOCATED

| AGGREGA-TION | MEDIAN VALUE OF ESTIMATED SAMPLE SIZE $n=Med(n_i)$ | BUDGET ALLOCA-TION $\varepsilon$ | NUMBER OF SUPERIMPOSITION OF NOISE $x$ | INFLUENCE OF NOISE $z$ $V[\frac{n+z}{n}]=\frac{2x}{(n\varepsilon)^2}$ |
|---|---|---|---|---|
| AGGREGA-TION(1) ITEM A×D | 1096 | 1.0 | 14 | $2.331 \times 10^{-5}$ |
| AGGREGA-TION(2) ITEM B×D | 860 | 1.0 | 4 | $1.082 \times 10^{-5}$ |
| AGGREGA-TION(3) ITEM B×C×D | 541 | 1.0 | 2 | $1.367 \times 10^{-5}$ |

PRIVACY BUDGET IS LARGER WHEN AGGREGATED TOGETHER (NOISE INTENSITY IS LOWER), BUT NOISE IS SUPERIMPOSED AND INFLUENCE OF NOISE IS MULTIPLIED BY THE NUMBER OF SUPERIMPOSITION OF NOISE

COMPARED TO AGGREGATION METHOD (a), INFLUENCE OF NOISE IS SMALLER FOR ALL OF AGGREGATIONS (1)-(3)

**Fig.23**

Fig.23

Device of Company A (10A):
- DATA INPUT UNIT — 11
- PRELIMINARY EXECUTION DATA GENERATION UNIT — 12
  - DATA PROCESSING UNIT — 12A
  - ANONYMIZATION PROCESSING UNIT — 12B
  - ID IRREVERSIBLE CONVERSION UNIT — 12C
  - ENCRYPTION UNIT — 12D
  - DATA TRANSMISSION/RECEPTION UNIT — 12E
- BASIC VALUE CALCULATION UNIT — 13
  - DATA MATCHING UNIT — 13A
  - AGGREGATE PROCESSING UNIT — 13B
  - DISCLOSURE LIMITATION PROCESSING UNIT — 13C
  - CALCULATION UNIT — 13D
- BASIC AGGREGATION INFORMATION ACQUISITION UNIT — 14A
- ESTIMATION UNIT — 15
- EVALUATION UNIT — 16
- ALLOCATION DETERMINATION UNIT — 17
- DEVICE OF COMPANY A

Device of Company B (10B):
- DATA INPUT UNIT
- PRELIMINARY EXECUTION DATA GENERATION UNIT
  - DATA PROCESSING UNIT — 12A
  - ANONYMIZATION PROCESSING UNIT
  - ID IRREVERSIBLE CONVERSION UNIT
  - ENCRYPTION UNIT
  - DATA TRANSMISSION/RECEPTION UNIT
- BASIC VALUE CALCULATION UNIT
  - DATA MATCHING UNIT
  - AGGREGATE PROCESSING UNIT
  - DISCLOSURE LIMITATION PROCESSING UNIT
  - CALCULATION UNIT
- BASIC AGGREGATION INFORMATION ACQUISITION UNIT — 14A
- ESTIMATION UNIT
- EVALUATION UNIT
- ALLOCATION DETERMINATION UNIT
- DEVICE OF COMPANY B

1

Fig.24

1

**DEVICE OF COMPANY B** — 10B

- DATA INPUT UNIT
- BASIC AGGREGATION INFORMATION ACQUISITION UNIT
- ESTIMATION UNIT
- EVALUATION UNIT
- ALLOCATION DETERMINATION UNIT

**DEVICE OF COMPANY A** — 10A

- DATA INPUT UNIT — 11
- BASIC AGGREGATION INFORMATION ACQUISITION UNIT — 14A
- ESTIMATION UNIT — 15
- EVALUATION UNIT — 16
- ALLOCATION DETERMINATION UNIT — 17

# Fig.25

## INTERNATIONAL SEARCH REPORT

| International application No. |
|---|
| **PCT/JP2024/017834** |

**A. CLASSIFICATION OF SUBJECT MATTER**

*G06F 21/62*(2013.01)i; *G06Q 10/06*(2023.01)i; *H04K 1/02*(2006.01)i
FI:  G06F21/62 354; G06Q10/06; H04K1/02

According to International Patent Classification (IPC) or to both national classification and IPC

**B. FIELDS SEARCHED**

Minimum documentation searched (classification system followed by classification symbols)

G06F21/62; G06Q10/06; H04K1/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | US 2021/0081412 A1 (HUAWEI TECHNOLOGIES CO., LTD.) 18 March 2021 (2021-03-18) | 1-10 |
| A | WO 2022/061162 A1 (LIVERAMP, INC.) 24 March 2022 (2022-03-24) | 1-10 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 June 2024** | **18 June 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

**INTERNATIONAL SEARCH REPORT**
Information on patent family members

International application No.

**PCT/JP2024/017834**

| Patent document cited in search report | | | Publication date (day/month/year) | Patent family member(s) | | | Publication date (day/month/year) |
|---|---|---|---|---|---|---|---|
| US | 2021/0081412 | A1 | 18 March 2021 | WO | 2020/063946 | A1 | |
| | | | | EP | 3779722 | A1 | |
| | | | | CN | 110968612 | A | |
| WO | 2022/061162 | A1 | 24 March 2022 | US | 2023/0351036 | A1 | |
| | | | | JP | 2023-543716 | A | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **BKAKRIA ANIS et al.** *Optimal distribution of privacy budget in differential privacy*, 16 October 2018